(19) Europäisches Patentamt
European Patent Office
Office européen des brevets

(11) **EP 1 854 202 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(21) Anmeldenummer: **06723136.5**

(22) Anmeldetag: **28.02.2006**

(51) Int Cl.:
**H02P 6/14** (2006.01)     **H02P 6/18** (2006.01)

(86) Internationale Anmeldenummer:
**PCT/EP2006/001815**

(87) Internationale Veröffentlichungsnummer:
**WO 2006/092265 (08.09.2006 Gazette 2006/36)**

(54) **ELEKTROMOTOR UND VERFAHREN ZU SEINER STEUERUNG**

ELECTRIC MOTOR AND METHOD FOR CONTROLLING SAID MOTOR

MOTEUR ELECTRIQUE ET PROCEDE DE COMMANDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.03.2005 DE 102005011263**

(43) Veröffentlichungstag der Anmeldung:
**14.11.2007 Patentblatt 2007/46**

(73) Patentinhaber: **ebm-papst St. Georgen GmbH & Co. KG**
**78112 St. Georgen (DE)**

(72) Erfinder:
• **JESKE, Frank**
  **78112 St. Georgen (DE)**

• **KARWATH, Arno**
  **78652 Deisslingen (DE)**
• **STRASSER, Günther**
  **78112 St. Georgen (DE)**
• **HELLER, Frank**
  **78126 Königsfeld-Burgberg (DE)**

(74) Vertreter: **Raible, Tobias**
**Raible & Raible**
**Schoderstrasse 10**
**70192 Stuttgart (DE)**

(56) Entgegenhaltungen:
**EP-A- 0 482 913     EP-A- 0 801 463**
**US-B1- 6 326 752     US-B1- 6 534 938**

**Beschreibung**

Die Erfindung betrifft einen Elektromotor, und ein Verfahren zu seiner Steuerung.

Bei Elektromotoren wird häufig gefordert, dass diese günstig und leise sind.

Aus der EP-A-0 482 913 kennt man ein Verfahren und eine Vorrichtung zur Steuerung eines sensorlosen Elektromotors, welcher einen permanentmagnetischen Rotor, einen Stator mit einer dreiphasigen Wicklung, und eine Endstufe zur Beeinflussung des durch die Wicklung fließenden Stromes aufweist, wobei folgende Schritte ausgeführt werden:

Die in der Wicklung induzierten Spannungen werden erfasst und in Rechtecksignale umgewandelt. Aus diesen wird durch eine logische Schaltung ein höherfrequentes Signal abgeleitet, das die Kommutierung steuert. Dazu werden aus dem höherfrequenten Signal sechs Signalfolgen abgeleitet.

Aus dem höherfrequenten Signal werden Signalrampen erzeugt, deren Steigung mittels Steuersignalen verändert werden kann, und diese Steuersignale werden an die augenblickliche Drehzahl des Rotors angepasst. Diese Steuersignale sind beim Start groß, und das ergibt steile Rampen der Kommutierungssignale.

Bei der Nenndrehzahl dauert eine ansteigende Rampe der Kommutierungssignale 60° el. Ein Abschnitt mit konstantem Strom dauert ebenfalls 60° el. Ebenso dauert die abfallende Rampe der Kommutierungssignale 60° el.

Durch diese Maßnahmen möchte man erreichen, dass man die Nulldurchgänge der induzierten Spannung exakt erfassen kann, so dass man ohne Verwendung eines Rotorstellungssensors die Rotorstellung zuverlässig erfassen kann.

Es ist deshalb eine Aufgabe der Erfindung, ein alternatives neues sensorloses Steuerverfahren für einen bürstenlosen ein- oder zweisträngigen Permanentmagnetmotor, und einen entsprechenden neuen Elektromotor, bereit zu stellen.

Diese Aufgabe wird nach der Erfindung gelöst durch ein Verfahren gemäß Patentanspruch 1. Durch die Bestromung mit einem im wesentlichen konstanten Strom wird eine Anpassung der Kommutierungszeitdauer in Abhängigkeit von einem erfassten Spannungssignal ermöglicht, um die Kommutierungszeitdauer an die Drehzahl des Rotors anzupassen. Dies ermöglicht eine Kommutierung ohne zusätzliche Rotorstellungssensoren und führt zu einem preiswerten Motor. Bei einem solchen Verfahren ist auch eine Drehzahlregelung möglich.

Eine bevorzugte Weiterbildung ergibt sich aus den Gegenständen der Ansprüche 14 und 15. Durch die Ermittlung der Kommutierungszeitdauer ist es möglich, den Kommutierungseinleitungsvorgang und den Kommutierungsabschlussvorgang in Form von Rampen durchzuführen. Dieses sanfte Ein- und Ausschalten verringert die Motorgeräusche und ermöglicht einen leiseren Motor.

Nach einem weiteren Aspekt der Erfindung wird die Aufgabe gelöst durch einen Elektromotor nach Anspruch 26. Ein solcher Elektromotor ermöglicht die Durchführung eines erfindungsgemäßen Verfahrens und führt zu einem günstigen und leisen Lauf des Elektromotors.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1    ein Prinzipschaltbild eines Ausführungsbeispiels einer erfindungsgemäßen Anordnung mit einem zweisträngigen Stator,

Fig. 2    ein Schaltbild für eine Auswertungseinrichtung für die induzierte Spannung,

Fig. 3    ein Schaltbild für eine Motorstromregelung,

Fig. 4    eine Darstellung des durch die Motorstromregelung geregelten Motorstroms,

Fig. 5    eine Prinzipdarstellung eines einphasigen, zweisträngigen Motors,

Fig. 6    eine Darstellung von in dem Motor aus Fig. 1 vorkommenden Strömen und Spannungen,

Fig. 7    eine schematische Darstellung eines Spätkommutierungsvorgangs,

Fig. 8    ein Oszillogramm eines Spätkommutierungsvorgangs,

Fig. 9    eine schematische Darstellung eines Frühkommutierungsvorgangs,

Fig. 10   ein Oszillogramm eines Frühkommutierungsvorgangs,

Fig. 11   eine Prinzipdarstellung eines einphasigen, einsträngigen Motors,

Fig. 12   eine Darstellung von in dem Motor aus Fig. 11 vorkommenden Strömen und Spannungen,

Fig. 13   eine Prinzipdarstellung eines Spätkommutierungsspannungsbereichs,

Fig. 14   ein Flussdiagramm für ein Gesamtprogramm für die Steuerung eines erfindungsgemäßen Motors

Fig. 15   eine schematische Darstellung einer Kommutierungsperiode,

Fig. 16   ein Flussdiagramm für eine Bestromung während einer Kommutierungsperiode,

Fig. 17   ein Flussdiagramm für eine Timerinterrupt-Routine,

Fig. 18    ein Flussdiagramm für die Erzeugung einer aufsteigenden Rampe,

Fig. 19    ein Flussdiagramm für die Erzeugung einer fallenden Rampe

Fig. 20    ein Flussdiagramm für eine Drehzahlregelung, und

Fig. 21    ein Blockschaltbild für einen Strom- und Drehzahlregler.

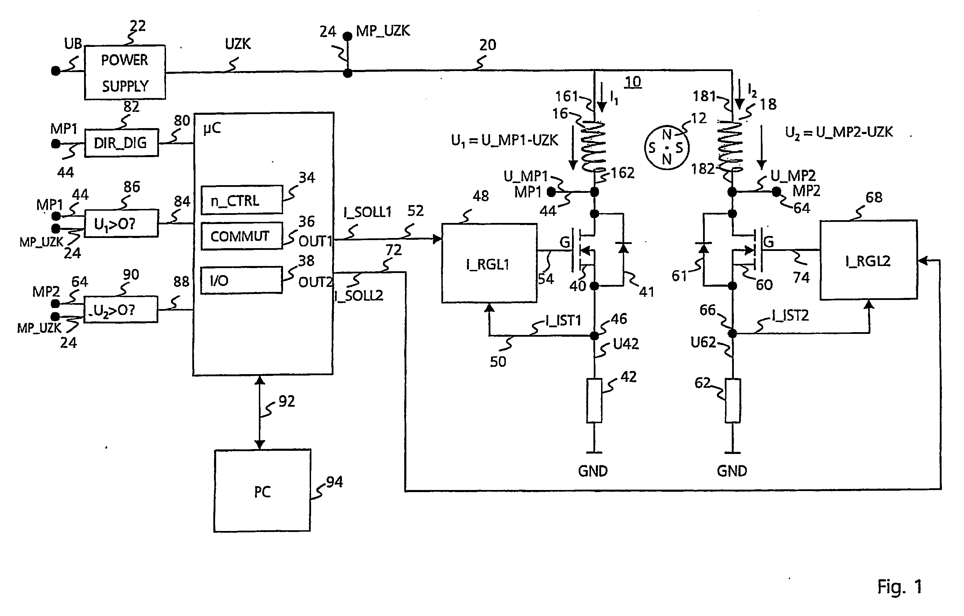

**Fig. 1** zeigt einen Elektromotor 10 mit einem permanentmagnetischen Rotor 12 und einem einphasigen, zweisträngigen Stator 14 mit einer Wicklungsanordnung 15, welche einem ersten Statorstrang 16 und einem zweiten Statorstrang 18 aufweist.

Das obere Ende der Stränge 16 und 18 ist jeweils über die Leitung 20 mit der Zwischenkreisspannung UZK verbunden, welche über einen Messpunkt MP_UZK 24 abgreifbar ist. Die Zwischenkreisspannung UZK wird durch ein Netzteil "Power Supply" 22 aus der Betriebsspannung +UB erzeugt, z.B. aus einer Netzwechselspannung oder aus einer Batterie.

Das untere Ende des ersten Strangs 16 ist über einen Mosfet 40 und einen Messwiderstand 42 mit Masse GND verbunden. Über einen Messpunkt MP1 44 wird das Potenzial am unteren Ende des ersten Strangs 16 abgegriffen. Über einen Punkt 46 wird das Potenzial zwischen dem Mosfet 40 und dem Widerstand 42 abgegriffen und einem Stromregler I_RGL1 48 über eine Leitung 50 zugeführt. Der Stromregler I_RGL1 48 ist über eine Leitung 52 mit einem Mikroprozessor µC 32 verbunden, welcher dem Stromregler I_RGL1 48 ein Sollwertsignal I_SOLL1 zuführt. Der Stromregler 48 ist über eine Leitung 54 mit dem Gate-Anschluss des Mosfet 40 verbunden, um diesen zu steuern.

In gleicher Weise ist das untere Ende des zweiten Strangs 18 über einen Mosfet 60 und einen Messwiderstand 62 mit Masse GND verbunden. Über einen Messpunkt MP2 64 wird das Potenzial am unteren Ende des zweiten Strangs 18 abgegriffen. Über einen Punkt 66 wird das Potenzial zwischen dem Mosfet 60 und dem Widerstand 62 abgegriffen und einem Stromregler I_RGL2 68 über eine Leitung 70 zugeführt. Der Stromregler I_RGL2 68 ist über eine Leitung 72 mit dem Mikroprozessor µC 32 verbunden, welcher dem Stromregler I_RGL2 68 ein Sollwertsignal I_SOLL2 zuführt. Der Stromregler 68 ist über eine Leitung 74 mit dem Gate-Anschluss des Mosfet 74 verbunden, um diesen zu steuern.

Die Stromsollwertsignale I_SOLL1 bzw. I_SOLL2 werden bevorzugt als analoge Spannungssignale oder als PWM-Signale vorgegeben.

Der Mikroprozessor µC 32 ist über eine Leitung 80 mit einer Drehrichtungsanzeigeschaltung "DIR_DIG" 82, über eine Leitung 84 mit einer Schaltung "U1 > 0?" 86 zur Erkennung des Vorzeichens der Spannung U1 und über eine Leitung 88 mit einer Schaltung "U2 > 0?" 90 zur Erkennung des Vorzeichens der Spannung U2 verbunden. Die Drehrichtungsanzeigeschaltung "DIR_DIG" 82 ist mit dem Messpunkt MP1 44, die Schaltung "U1 > 0?" mit den Messpunkten MP1 44 und MP_UZK 24 und die Schaltung "U2 > 0?" mit den Messpunkten MP2 64 und MP_UZK 24 verbunden.

Dem Mikroprozessor µC 32 werden über einen bidirektionalen Datenbus 92 Betriebsdaten wie z.B. eine Solldrehzahl n_s zugeführt, und das in dem Mikroprozessorµ C 32 ablaufende Programm steuert die Drehzahl (n_CTRL), die Kommutierung (COMMUT) und die Ein- und Ausgabe (I/O).

Beispielwerte für die Bauteile:

| | |
|---|---|
| µC 32 | PIC16F873A |
| Mosfets 40, 60 | SPB47N10 (mit integrierter Freilaufdiode) |
| Widerstände 42, 62 | 1,5 Ohm |

**Funktionsweise**

Der Rotor 12 wird angetrieben, indem die Stränge 16 und 18 abwechselnd bestromt werden. Der Strom wird durch die Mosfets 40 und 60 gesteuert, und über die Stromregler 48 und 68 findet eine Stromregelung statt. Der erfindungsgemäße Elektromotor 10 arbeitet sensorlos, d.h. es ist kein Rotorstellungssensor wie z.B. ein Hall-Sensor vorgesehen. Die Drehrichtung wird über die Drehrichtungsanzeigeschaltung 82 aus dem Potenzial am Messpunkt MP1 bzw. MP2 bestimmt, und die Kommutierung, also das Wechseln zwischen der Bestromung des ersten und zweiten Strangs, erfolgt über eine Messung und Auswertung der Spannungen U1 und U2.

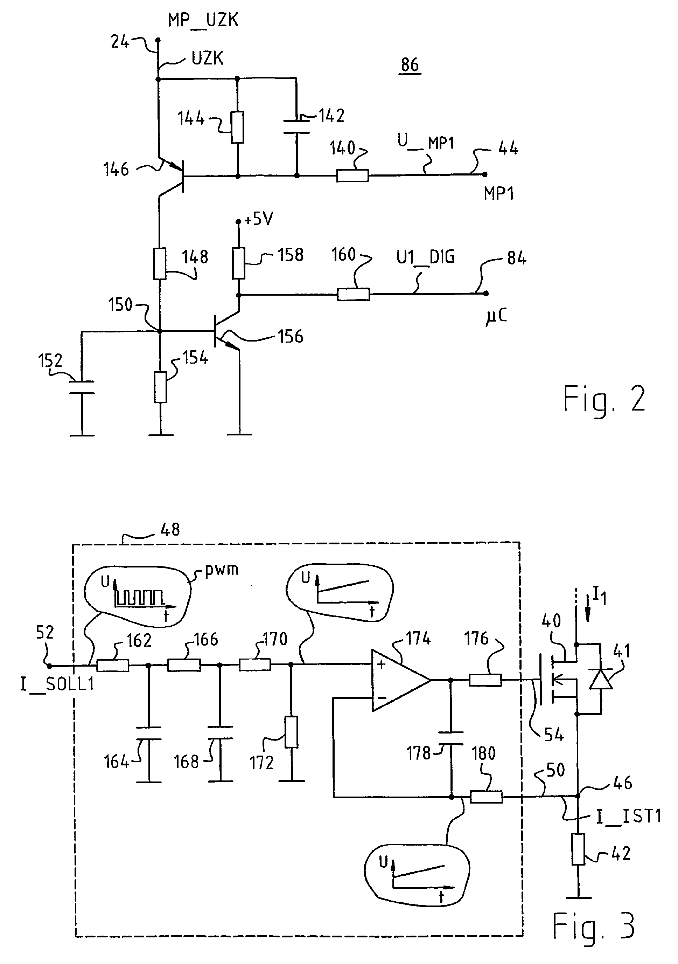

**Fig. 2** zeigt ein Ausführungsbeispiel für die Schaltung "U1 > 0?" 86. Die Schaltung 86 weist einen Widerstand 140 auf, der auf der einen Seite mit dem Messpunkt MP1 44 und auf der anderen Seite mit der Basis eines pnp-Transistors 146 verbunden ist. Ein Kondensator 142 und ein Widerstand 144 sind jeweils auf der einen Seite mit der Basis des Transistors 146 und auf der anderen Seite mit dem Messpunkt MP_UZK 24 verbunden. Der Emitter des Transistors 146 ist ebenfalls mit dem Messpunkt 24 verbunden. Der Kollektor des Transistors 146 ist über einen Widerstand 148 mit einem Punkt 150 verbunden. Der Punkt 150 ist über einen Kondensator 152 und über einen Widerstand 154 mit Masse GND verbunden. Der Messpunkt 150 ist ebenfalls mit der Basis eines npn-Transistors 156 verbunden. Der Emitter des Transistors 156 ist mit Masse GND verbunden, und der Kollektor des Transistors 156 ist über einen Widerstand 158 mit einer Spannung "+ 5 V" und über einen Widerstand 160 mit der Leitung 84 verbunden, welche zum µC 32 führt.

Das über den Messpunkt MP1 abgegriffene Signal U_MP1 wird über den Widerstand 140 und zur Filterung von Störspannungsspitzen über den aus dem Widerstand 144 und dem Kondensator 142 gebildeten Tiefpass der Basis des Transistors 146 zugeführt. Wenn das Signal U_MP1 kleiner als das Signal UZK ist, leitet der Transistor 146. Wenn dagegen das Signal U_MP1 größer als das Signal UZK ist, sperrt der Transistor 146.

Wenn der Transistor 146 sperrt, wird die Basis des Transistors 156 auf Masse gezogen, und dieser sperrt ebenfalls. Dadurch wird die Leitung 84 auf + 5 V gezogen, und dies bedeutet für den μC 23 ein High-Signal. Leitet der Transistor 146 dagegen, so wirken die Widerstände 148 und 154 als Spannungsteiler und erhöhen das Potenzial an der Basis des Transistors 156. Hierdurch wird der Transistor 156 leitend, und die Leitung 84 wird auf Masse GND gezogen, was für den μC 32 einem Signal Low entspricht.

Durch die Schaltung 86 wird das Vorzeichen der Spannung

$$U1 = U\_MP1 - UZK$$

in ein digitales Signal U1_DIG umgewandelt. Für U1 > 0 V ist U1_DIG = High und für U1 <= 0V ist U1_DIG = Low. Dies ermöglicht eine einfache Auswertung der Spannung U1 durch den μC 32.

Die Schaltung "U2 > 0?" 90 ist bevorzugt in gleicher Weise aufgebaut.

Beispielwerte für die Bauteile:

| | |
|---|---|
| Widerstand 140 | 47 kOhm |
| Kondensator 142 | 470 pF |
| Widerstand 144 | 470 kOhm |
| pnp-Transistor 146 | PMBTA92 |
| Widerstand 148 | 68 kOhm |
| Kondensator 152 | 1 nF |
| Widerstand 154 | 10 kOhm |
| npn-Transistor 156 | BC846B |
| Widerstand 158 | 4,7 kOhm |
| Widerstand 160 | 1 kOhm |

**Fig. 3** zeigt ein Ausführungsbeispiel für die Schaltung "I_RGL1" 48, der vom μC 32 ein Stromsollwertsignal I_SOLL1 und über die Leitung 50 ein Signal I_IST1 vom Fußpunktwiderstand 42 zugeführt wird. Die Schaltung 48 steuert den Mosfet 40 über die Leitung 54 an.

Das Signal I_SOLL1 wird einem Operationsverstärker 174 über drei in Reihe geschaltete Widerstände 162, 166 und 170 zugeführt. Zwischen den Widerständen 162 und 166 ist ein Kondensator 164 gegen Masse geschaltet, und zwischen den Widerständen 166 und 170 ist ein Kondensator 168 gegen Masse geschaltet. Zwischen dem Widerstand 170 und dem Plus-Eingang des Operationsverstärkers 174 ist ein Widerstand 172 gegen Masse geschaltet.

Das Signal I_IST1 wird dem Minus-Eingang des Operationsverstärkers 174 über einen Widerstand 180 zugeführt. Der Ausgang des Operationsverstärkers 174 ist über einen Widerstand 176 mit dem Gate-Anschluss des Mosfet 40 verbunden. Der Minus-Eingang und der Ausgang des Operationsverstärkers 174 sind über einen Kondensator 178 verbunden.

Das Sollwertsignal I_SOLL1 wird in diesem Ausführungsbeispiel vom μC 32 als PWM-Signal pwm vorgegeben. Das PWM-Signal wird durch den aus den Widerständen 162, 166 und 170 sowie den Kondensatoren 164 und 168 gebildeten Tiefpass geglättet und dem Plus-Eingang des Operationsverstärkers 174 zugeführt. Der Motorstrom I1 wird über den Fußpunktwiderstand 42 gemessen, und das Potenzial am Punkt 46 wird dem Minus-Eingang des Operationsverstärkers 174 über den Widerstand 180 zugeführt. Der Operationsverstärker 174 steuert den Gate-Anschluss des Mosfet 40 über den Widerstand 176 und führt damit eine Stromregelung des Stroms I1 derart durch, dass das Potenzial am Punkt 46 dem Stromsollwert I_SOLL1 entspricht.

Die Verwendung eines analogen Stromreglers ermöglicht den Einsatz eines einfachen μC 32, da dieser nur die Berechnung des Stromsollwerts I_SOLL1 durchführen muss. Alternativ kann auch ein digitaler Stromregler verwendet werden, bei dem der Stromistwert I_IST1 dem μC 32 in geeigneter Form zugeführt wird.

Der Stromregler "I_RGL2" 68 wird bevorzugt in gleicher Weise aufgebaut wie der Stromregler "I_RGL1" 48. Beispielwerte für die Bauteile:

| | |
|---|---|
| Widerstand 162 | 22 kOhm |
| Kondensator 164 | 10 nF |

(fortgesetzt)

| Widerstände 166, 170 | 10 kOhm |
|---|---|
| Widerstand 172 | 1,8 kOhm |
| Operationsverstärker 174 | TSH24 |
| Widerstand 176 | 220 Ohm |
| Kondensator 178 | 22 pF |
| Widerstand 180 | 10 kOhm |

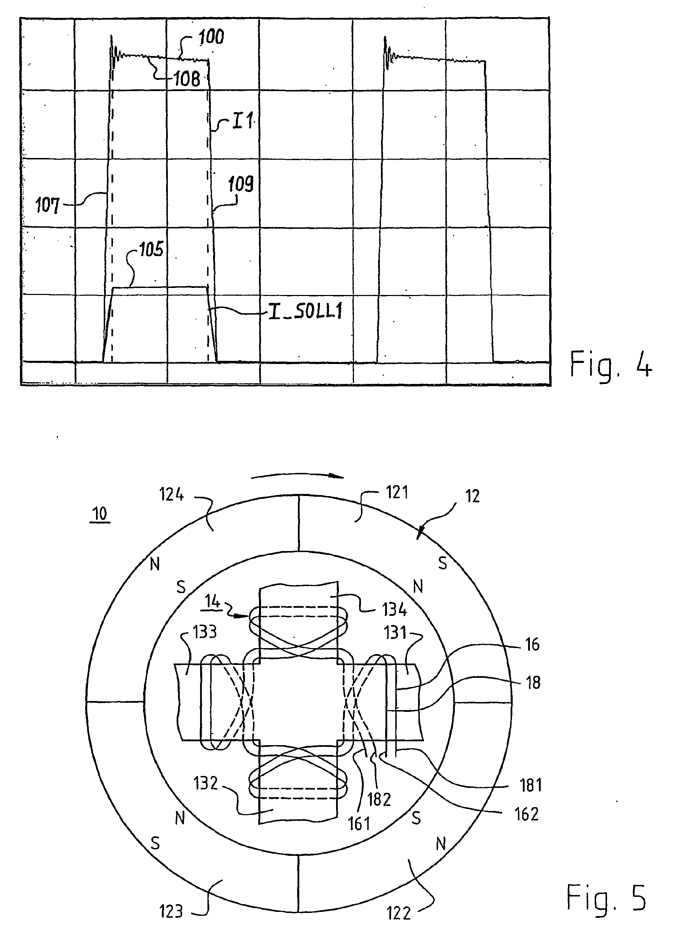

**Fig. 4** zeigt das Stromsollwertsignal I_SOLL1 als Linie 105 und den durch den analogen Stromregler 48 gemäß dem Stromsollwertsignal geregelten Motorstrom I1 als Linie 100. Der Motorstrom I1 folgt somit im Wesentlichen dem Sollwert I_SOLL1, er steigt also in Form einer ansteigenden Rampe 107 an, verläuft dann bei einem konstanten Stromsollwertsignal I_SOLL1 in Form eines Plateaus 108 im Wesentlichen konstant und fällt dann in Form einer abfallenden Rampe 109 ab in Richtung 0 V. Eine solche Form wird auch Trapezform genannt. Wie beim Plateau 108 zu sehen ist, schwingt der Stromregler 48 anfangs leicht über, und der Motorstrom I1 fällt leicht ab. Dies ist bei einfachen Stromreglern üblich, und ein solcher Motorstrom kann trotzdem als konstant und in jedem Fall als im Wesentlichen konstant bezeichnet werden. Der Stromregler kann den Motorstrom I1 auch auf den Wert 0 A regeln.

Im Gegensatz zu einem "harten" Ein- und Ausschalten des Stroms I1 erzeugt das Ein- und Ausschalten des Stroms I1 in Form einer Rampe weniger Geräusche

**Fig. 5** zeigt eine schematische Darstellung des Stators 14 und des permanentmagnetischen Rotors 12. Der Außenrotor 12 weist vier Pole 121, 122, 123 und 124 auf. Der Stator 14 besteht aus weichferromagnetischem Material und weist ebenfalls vier Pole 131, 132, 133 und 134 auf, deren Polarität durch den durch den Statorstrang 16 bzw. 18 fließenden Motorstrom bestimmt wird. Die Statorstränge 16 und 18 werden zur Kostenersparnis bifilar gewickelt, und die entgegengesetzte Magnetfelderzeugung wird dadurch erreicht, dass die Zwischenkreisspannung beim ersten Strang 16 am Anfang 161 des Wicklungsdrahts und beim zweiten Strang 18 am Ende 181 des Wicklungsdrahts anliegt. Beim dargestellten Motor 10 ist die durch eine Drehung des Rotors 12 induzierte Spannung abhängig vom Drehwinkel.

**Kommutierung**

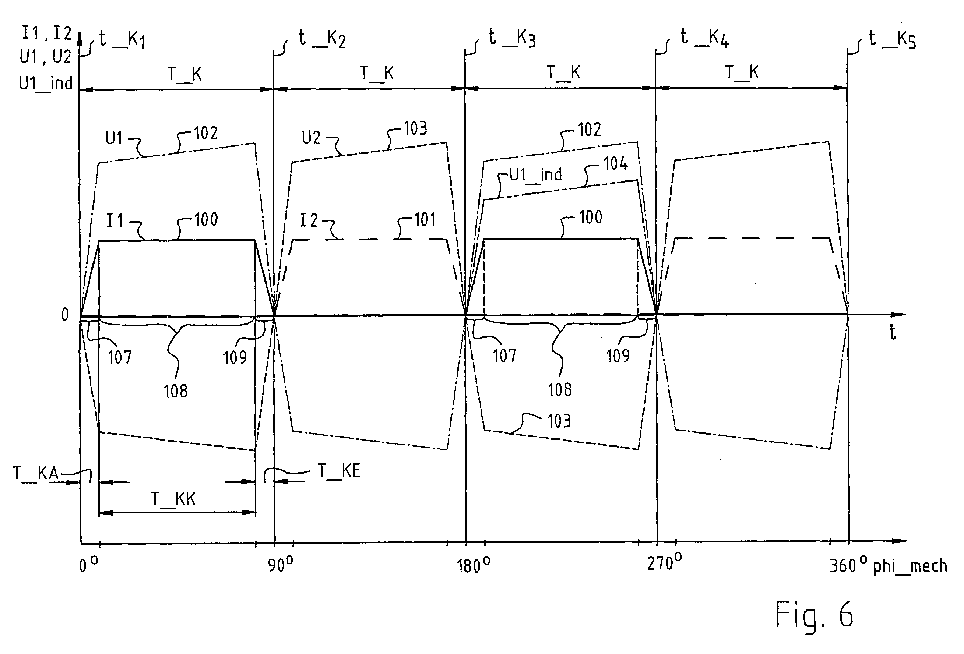

**Fig. 6** zeigt eine schematische Darstellung der Bestromung des Stators 14 aus Fig. 5 über eine volle Umdrehung des Rotors 12 (360° mech.). Der Strom I1 durch den Statorstrang 16 ist als Linie 100 dargestellt, der Strom I2 durch den Statorstrang 18 als Linie 101, die am Statorstrang 16 anliegende Spannung U1 als Linie 102 und die an dem Statorstrang 18 anliegende Spannung U2 als Linie 103.

Es sind vier Kommutierungsperioden (720° el.) dargestellt, welche sich zwischen den Kommutierungszeitpunkten t_K1 und t_K2 bzw. t_K2 und t_K3 bzw. t_K3 und t_K4 bzw. t_K4 und T_K5 erstrecken. Allgemein wird im Folgenden für eine Kommutierungsperiode der jeweils erste Kommutierungszeitpunkt als $t\_K_N$ und der jeweils zweite Kommutierungszeitpunkt als $t\_K_{N+1}$ bezeichnet. Die Kommutierungszeitdauer der Kommutierungsperioden ist jeweils mit T_K bezeichnet. Während einer Kommutierungsperiode wird nur einer der Statorstränge 16 und 18 der Wicklung 15 bestromt, so dass sich während dieser Kommutierungsperiode die Richtung des durch die Bestromung der Wicklung 15 erzeugten Magnetfeldes nicht verändert. Die Statorstränge 16 und 18 werden durch die Ströme I1 bzw. I2 abwechselnd bestromt.

Während jeder Kommutierungsperiode finden ein Kommutierungsabschlussvorgang 107, ein Vorgang 108 mit im Wesentlichen konstanter Bestromung und ein Kommutierungseinleitungsvorgang 109 statt. In diesem Ausführungsbeispiel beginnt der Kommutierungsabschlussvorgang 107 nach dem Kommutierungszeitpunkt $t\_K_N$, und während des Kommutierungsabschlussvorgangs 107 steigt der Strom I1 bzw. I2 in Form einer Rampe an. Die Zeitdauer für den Kommutierungsabschlussvorgang wird mit T_KA bezeichnet. Auf den Kommutierungsabschlussvorgang 107 folgt eine Phase 108 mit konstanter Bestromung über einen Zeitraum T_KK. Nach der Phase 108 mit im Wesentlichen konstanter Bestromung folgt der Kommutierungseinleitungsvorgang 109, während dem in diesem Ausführungsbeispiel der Strom I1 bzw. I2 in Form einer Rampe vermindert wird, bis er den Wert 0 V erreicht. Die Zeitdauer für den Kommutierungseinleitungsvorgang wird mit T_KE bezeichnet.

Die Spannungen U1 am Statorstrang 16 und U2 am Statorstrang 18 können insbesondere die folgenden Anteile enthalten:

$$U1 = U1\_ind + L_{11} * dI1 / dt + I1 * R1 + L_{12} * dI2 / dt \qquad (1)$$

$$U2 = U2\_ind + L_{22} * dI2 / dt + I2 * R2 + L_{21} * dI1 / dt \qquad (2)$$

mit

U1:        Spannung am Statorstrang 16

U2:        Spannung am Statorstrang 18

U1_ind:    Im Statorstrang 16 durch den sich drehenden permanentmagnetischen Rotor 12 induzierte Spannung

U2_ind:    Im Statorstrang 18 durch den sich drehenden permanentmagnetischen Rotor 12 induzierte Spannung

$L_{11}$:      Selbstinduktivität des Statorstrangs 16

$L_{22}$:      Selbstinduktivität des Statorstrangs 18

I1:        Strom durch den Statorstrang 16

I2:        Strom durch den Statorstrang 18

R1:        Ohmscher Widerstand des Statorstrangs 16

R2:        Ohmscher Widerstand des Statorstrangs 18

$L_{12}$:      Gegeninduktivität zwischen dem Statorstrang 18 und dem Statorstrang 16

$L_{21}$:      Gegeninduktivität zwischen dem Statorstrang 16 und dem Statorstrang 18

Bei einer Bestromung des Statorstrangs 16 mit einem konstanten Strom I1 und einem Strom I2 = 0 (Phase 108) fallen in den Gleichungen (1) und (2) die zeitabhängigen Terme weg, und es bleibt übrig:

$$U1 = U1\_ind + I1 * R1 \qquad (3)$$

$$U2 = U2\_ind \qquad (4)$$

In gleicher Weise gilt bei einer Bestromung des Statorstrangs 18 mit einem konstanten Strom I2 und einem Strom I1 = 0:

$$U1 = U1\_ind \qquad (5)$$

$$U2 = U2\_ind + I2 * R2 \qquad (6)$$

Somit kann bei einem einphasigen, zweisträngigen Motor bei einer konstanten Bestromung des einen Wicklungsstrangs die induzierte Spannung U_ind jeweils an dem unbestromten Wicklungsstrang erfasst werden. Während des Kommutierungsvorgangs wäre eine solche Erfassung dagegen wegen des sich ändernden Stroms I1 bzw. I2 im Allgemeinen nicht bzw. nur sehr ungenau möglich.

Im Folgenden wird die Kommutierungsperiode zwischen dem Kommutierungszeitpunkt t_K3 und dem Kommutierungszeitpunkt t_K4 betrachtet. Während der Phase 108 mit konstanter Bestromung des Statorstrangs 16 setzt sich die Spannung U1 am Statorstrang 16 gemäß Gleichung (3) zusammen aus der induzierten Spannung U1_ind, welche als Linie 104 dargestellt ist, sowie einem auf Grund des konstanten Stroms I1 konstanten Beitrag I1 * R1. Daher entspricht die Spannung U1 nicht direkt der induzierten Spannung U1_ind. Da der Strom I2 jedoch 0 A beträgt, entspricht die Spannung U2 am Statorstrang 18 während der Phase 108 der konstanten Bestromung der induzierten Spannung U2_ind, wobei aufgrund der gewählten Wicklung 15 gemäß Fig. 5 gilt:

$$U1\_ind = -U2\_ind \qquad (7)$$

Die Spannungen U1 bzw. U2 steigen während der Phase 108 der konstanten Bestromung leicht an, da der Motor 10 zur Erzeugung eines Reluktanz-Hilfsmoments ausgebildet ist. Bei einem solchen Motor ist die induzierte Spannung U1_ind bzw. U2_ind bei gleich bleibender Drehzahl abhängig vom augenblicklichen Drehwinkel phi_mech, da die Statorpole 131, 132, 133 und 134 asymmetrisch ausgebildet sind, wie es in Fig. 5 ganz schematisch angedeutet ist. Durch die leichte Steigung der Spannungen U1 bzw. U2 ist eine Erkennung der Drehrichtung des Rotors 12 möglich. In der einen Drehrichtung steigt die induzierte Spannung jeweils an, und in der entgegengesetzten Drehrichtung fällt die Spannung jeweils ab.

In dem Ausführungsbeispiel aus Fig. 6 wird der Elektromotor 10 angetrieben, und nach jeweils 90 ° mechanisch bzw. 180 ° el. elektrisch wird die Bestromung vom einen Statorstrang auf den anderen Statorstrang gewechselt. Dies setzt jedoch voraus, dass die Kommutierungszeitdauer T_K genau der Zeit entspricht, die der Rotor 12 für eine Drehung von 90 ° mechanisch benötigt. Da die Kommutierungszeitdauer T_K beim Anlauf bzw. bei der Beschleunigung des Motors 10 während jeder Kommutierungsperiode kürzer wird, sich bei einer Änderung einer durch den Motor 10 angetriebenen bzw. abgebremsten Last ändert oder durch eine Änderung der Höhe des Stroms I1 bzw. I2 geändert wird, muss ständig eine Anpassung der Kommutierungszeitdauer T_K an den aktuellen Betriebszustand des Motors 10 vorgenommen werden. Dies kann z. B. mit Rotorstellungssensoren erfolgen. Im Folgenden wird jedoch ein Verfahren beschrieben, bei dem die Anpassung der Kommutierungszeitdauer T_K über eine Auswertung der Spannungen U1 und/ oder U2 erfolgt.

## Spätkommutierungsvorgang

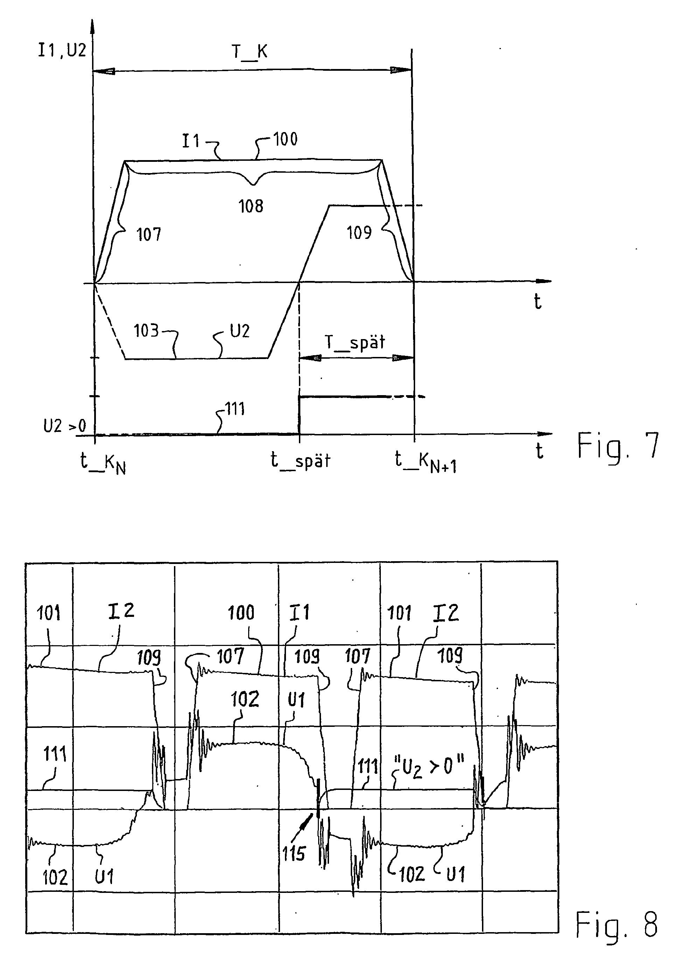

**Fig. 7** zeigt ein schematisches Diagramm, in dem der Strom I1 als Linie 100, die Spannung U2 als Linie 103 und das durch die Vorrichtung 90 erzeugte Signal "U2 > 0" als Linie 111 dargestellt sind. In diesem Beispielfall ist die Kommutierungszeitdauer T_K zu groß, und die Kommutierung findet somit nicht nach einer Umdrehung von 180° el., sondern zu spät statt. Daher findet während der Phase 108 mit konstanter Bestromung bereits ein Wechsel des Vorzeichens der Spannung U2 statt, und die Spannung U2, die zu diesem Zeitpunkt der induzierten Spannung U2_ind entspricht, befindet sich in einem für diese Kommutierungsperiode ungeeigneten Bereich U2 > 0, was zu einer Bremsung des Motors 10 führt.

Das Signal 111 "U2 > 0" springt zum Zeitpunkt des Vorzeichenwechsels der Spannung U2 von Low auf High. Der Zeitpunkt des Wechsels wird im Folgenden als Spätkommutierungszeitpunkt t_spät bezeichnet.

Die Kommutierungszeitdauer T_K kann nun korrigiert werden, indem von ihr die Spätkommutierungszeitdauer T_spät abgezogen wird. Die Spätkommutierungszeitdauer T_spät ergibt sich aus dem Zeitraum zwischen dem Spätkommutierungszeitpunkt t_spät und dem durch die Kommutierungszeitdauer T_K vorgegebenen Kommutierungszeitpunkt $t\_K_{N+1}$. Die richtige Kommutierungszeitdauer T_K ergibt sich auch direkt aus dem Zeitraum zwischen dem Kommutierungszeitpunkt $t\_K_N$ und dem Zeitpunkt t_spät.

Ein solcher Vorgang, bei dem die Spannung U1 bzw. U2 während der Zeitdauer T_KK der konstanten Bestromung einen Wert aus einem für die gewählte Betriebsart des Motors 10 für die jeweilige Kommutierungsperiode ungeeigneten Bereich annimmt, wird als Spätkommutierungsvorgang bezeichnet.

**Fig. 8** zeigt eine Beispielmessung für einen Spätkommutierungsvorgang, wie er in Fig. 7 dargestellt ist. Der Strom I1 ist als Linie 100 dargestellt, der Strom I2 als Linie 101, die Spannung U1 als Linie 102 und das Signal "U2 > 0" als Linie 111. An der Stelle 115 wird das Signal "U2 > 0" kurz vor Beendigung der konstanten Bestromung des Statorstrangs 106 positiv. Dies bedeutet, dass die Kommutierungszeitdauer T_K zu groß ist und ein Spätkommutierungsvorgang vorliegt.

Man erkennt auch, dass die Spannung U1 und damit auch die Spannung U2 während der Rampen 107 und 109 durch den sich zeitlich ändernden Strom und den Regler große Störungen aufweisen und damit nicht oder nur schlecht zur Auswertung der induzierten Spannung U1_ind bzw. U2_ind geeignet sind.

## Frühkommutierungsvorgang

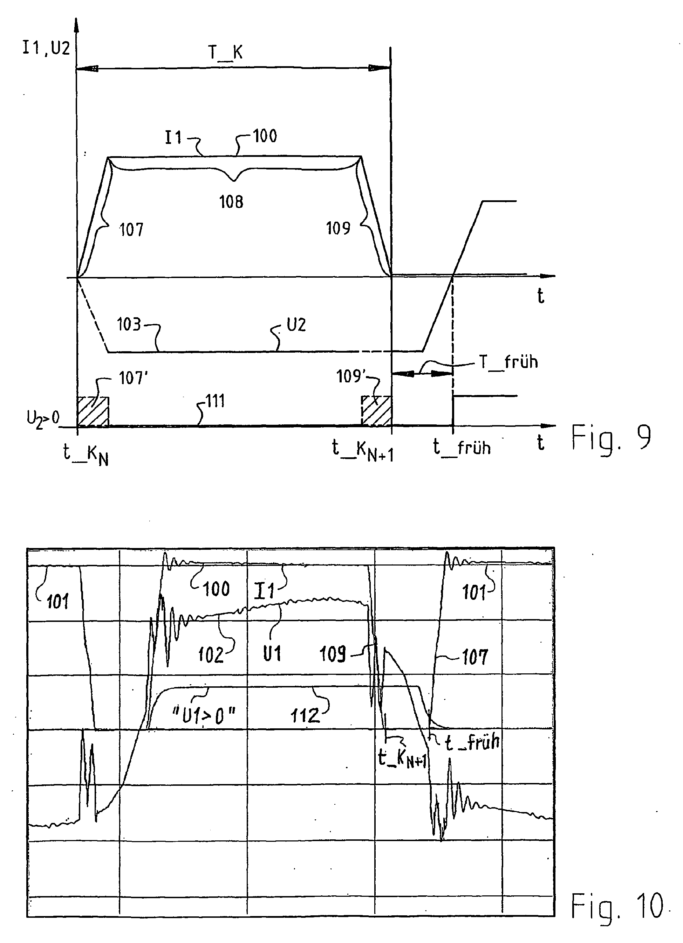

**Fig. 9** zeigt ein schematisches Diagramm, in dem der Strom I1 als Linie 100, die Spannung U2 als Linie 103 und das durch die Vorrichtung 90 erzeugte Signal "U2 > 0?" als Linie 111 dargestellt sind. In diesem Beispielfall ist die Kommutierungsdauer T_K zu klein. Dies hat zur Folge, dass die induzierte Spannung U1_ind bzw. U2_ind nicht wie im Idealfall einen Vorzeichenwechsel zum Kommutierungszeitpunkt $t\_K_{N+1}$ aufweist, sondern der Vorzeichenwechsel findet erst nach einer Frühkommutierungszeitdauer T_früh statt.

Da nach dem Kommutierungseinleitungsvorgang 109 sowohl I1 = 0 als auch I2 = 0 ist, entspricht sowohl U1 als auch U2 der induzierten Spannung, vgl. Gleichungen (3) und (4). In diesem Ausführungsbeispiel erfolgt die Messung der induzierten Spannung über die Spannung U2. Diese weist zum Zeitpunkt t_früh einen Vorzeichenwechsel auf, und das Signal "U2 > 0?" 111 wechselt zum Zeitpunkt t_früh von Low nach High.

Die Kommutierungszeitdauer T_K kann nun korrigiert werden, indem sie um die Frühkommutierungszeitdauer T_früh vergrößert wird. Die Frühkommutierungszeitdauer T_früh ergibt sich aus dem Zeitraum zwischen dem durch die Kommutierungszeitdauer T_K vorgegebenen Kommutierungszeitpunkt $t\_K_{N+1}$ und dem Frühkommutierungszeitpunkt t_früh. An Stelle des Kommutierungszeitpunkts $t\_K_{N+1}$ kann allgemein auch der Zeitpunkt des Endes des Kommutierungseinleitungsvorgangs 109 verwendet werden.

Ein solcher Vorgang, bei dem die Spannung U1 bzw. U2 nach dem Ende des Kommutierungseinleitungsvorgangs 109 einen Wert aus einem für die Gerätebetriebsart des Motors 10 für die jeweilige Kommutierungsperiode ungeeigneten Bereich annimmt, wird als Frühkommutierungsvorgang bezeichnet.

**Fig. 10** zeigt eine Beispielmessung für einen Frühkommutierungsvorgang, wie er in Fig. 9 dargestellt ist. Der Strom I1 ist als Linie 100 dargestellt, der Strom I2 als Linie 101, die Spannung U1 als Linie 102 und das Signal "U1 > 0?" als Linie 112. Wie bei der Beschreibung zu Fig. 9 erläutert, kann die induzierte Spannung nach Beendigung des Kommutierungseinleitungsvorgangs 109 auch über die Spannung U1 gemessen werden, die zum Frühkommutierungszeitpunkt t_früh einen Vorzeichenwechsel von High nach Low vornimmt.

Man erkennt auch, dass die Spannung U1 während des Kommutierungseinleitungsvorgangs 109 große Störspitzen aufweist, was eine Auswertung der induzierten Spannung während des Kommutierungseinleitungsvorgangs 109 stark erschwert bzw. unmöglich macht. Die Störungen während des Kommutierungseinleitungsvorgangs 109 kommen auch durch die Arbeit des Stromreglers, welcher den Strom I1 in einer vorgegebenen Form zum Wert I1 = 0 V führt.

Zum Zeitpunkt t_früh wird ein Wechsel des Signals "U1 > 0?" 112 von High nach Low detektiert. Nach dieser Detektion wird in diesem Ausführungsbeispiel der Kommutierungsabschlussvorgang 107 durchgeführt, es wird also mit der Bestromung des Statorstrangs 18 begonnen. Bevorzugt wird zur Berechnung des kommenden Kommutierungszeitpunkt t_$K_{N+2}$ (nicht dargestellt) der Zeitpunkt t_früh als erster Kommutierungszeitpunkt t_$K_{N+1}$ gewählt.

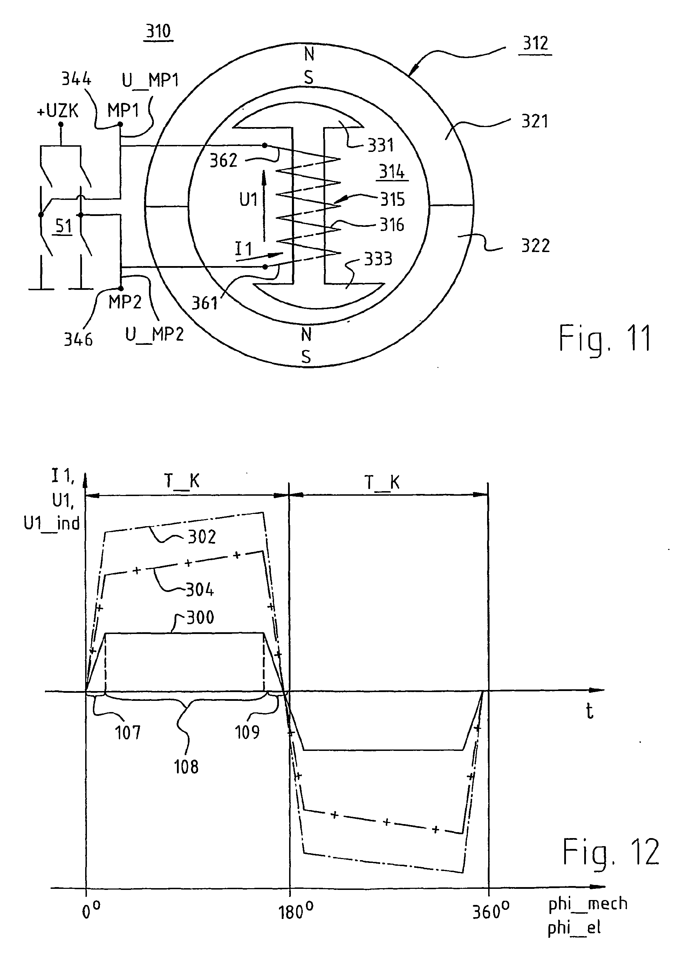

**Fig. 11** zeigt einen Elektromotor 310 mit einem einphasigen, einsträngigen Stator 314 und einem zweipoligen Rotor 312. Der Rotor 312 weist einen ersten Rotorpol 321 und einen entgegengesetzt magnetisierten zweiten Rotorpol 322 auf. Der Stator 314 weist einen ersten Pol 331 und einen zweiten Pol 333 sowie eine Wicklung 315 auf. Die Wicklung 315 weist einen Statorstrang 316 auf, der über zwei Anschlüsse 361 und 362 mit einer schematisch angedeuteten Endstufe 51 verbunden ist. Die Endstufe 51 ist bevorzugt als Vollbrückenschaltung ausgebildet, damit eine Bestromung des Strangs 316 in beide Richtungen möglich ist. Dabei wird der Strom durch den Strang 316 mit I1 und die an dem Statorstrang 316 abfallende Spannung als U1 bezeichnet.

Die Spannung U1 wird bevorzugt über zwei Messpunkte MP1 344 und MP2 346 gemessen, die an den entgegengesetzten Enden des Statorstrangs 316 angeordnet sind, und an denen die Spannungen U_MP1 und U_MP2 anliegen. Die Spannung U1 ergibt sich zu

$$U1 = U\_MP2 - U\_MP1 \tag{8}$$

**Fig. 12** zeigt eine Darstellung des Stroms I1 als Linie 300, der Spannung U1 als Linie 302 sowie der in den Statorstrang 316 induzierten Spannung U1_ind als Linie 304. Während einer Kommutierungsperiode der Länge T_K finden wie bei dem zweisträngigen Ausführungsbeispiel ein Kommutierungsabschlussvorgang 107, ein Vorgang 108 mit konstanter Bestromung sowie ein Kommutierungseinleitungsvorgang 109 statt. Während des Vorgangs 108 der konstanten Bestromung setzt sich die Spannung U1 gemäß Gleichung (3) aus der in den Statorstrang 316 durch den sich drehenden permanentmagnetischen Rotor 312 induzierten Spannung U1_ind sowie einem von der Größe des konstanten Stroms I1 abhängigen konstanten Faktor I1 * R1 zusammen.

Für die Überprüfung, ob ein Spätkommutierungsvorgang vorliegt, wird der Anteil I1 * R1 von der Spannung U1 abgezogen. Dabei kann als Wert des Stroms I1 entweder der Sollwert für den entsprechenden Stromregler verwendet werden, oder er wird durch eine Strommessvorrichtung ermittelt.

**Spätkommutierungsspannungsbereich und Frühkommutierungsspannungsbereich**

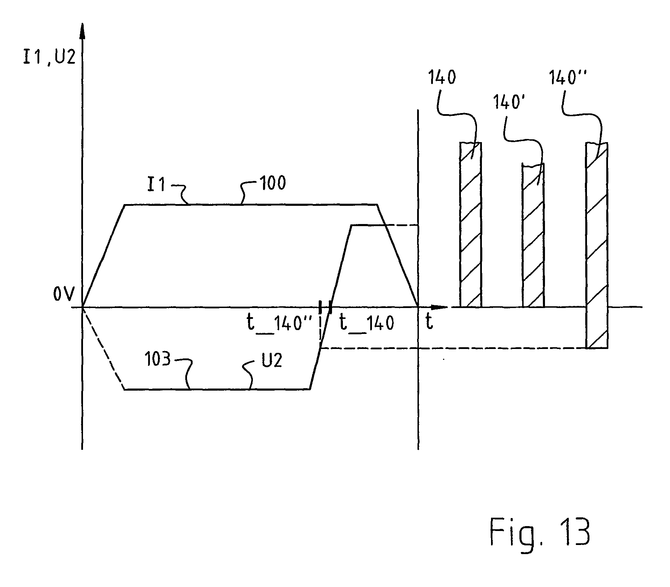

**Fig.13** zeigt einen Spätkommutierungsvorgang. Ein Strom I1 ist als Linie 100 eingezeichnet und eine Spannung U2 als Linie 103. Zur Erkennung eines Spätkommutierungsvorgangs wird ein Spätkommutierungsspannungsbereich 140 definiert. Der Spätkommutierungsspannungsbereich 140 beginnt bei 0 V und umfasst den gesamten positiven Bereich. Um nun zu klären, ob ein Spätkommutierungsvorgang vorliegt, wird geprüft, ob sich der Wert des Spannungssignals U2 innerhalb des Spätkommutierungsspannungsbereichs 140 befindet. Dies ist zum Zeitpunkt t_140 der Fall, und somit findet ein Spätkommutierungsvorgang statt.

Der Spätkommutierungsbereich 140 kann auf unterschiedliche Arten definiert werden. Als weitere Ausführungsbeispiele sind zwei Spätkommutierungsspannungsbereiche 140' und 140" dargestellt. Der Spätkommutierungsbereich 140' ist im Gegensatz zum Spätkommutierungsbereich 140 nicht nach oben offen, sondern er endet bei einer maximalen Spannung. Dies ermöglicht ggf. eine einfachere Auswertungsschaltung. Der Spätkommutierungsspannungsbereich 140" beginnt dagegen nicht bei 0 V, sondern bei einer negativen (oder positiven) Spannung. Dies kann beispielsweise dazu verwendet werden, einen Spätkommutierungsvorgang früher zu erkennen. Die Erkennung geschieht hierbei zum Zeitpunkt t_140", der zeitlich vor dem Zeitpunkt t_140 liegt. Weiterhin kann eine solche Verschiebung beispielsweise einen Offset der Spannung U2 berücksichtigen, wie er bei einem einsträngigen Motor durch den Anteil I1 * R1 auftreten kann.

In gleicher Weise kann für den Frühkommutierungsvorgang ein Frühkommutierungsspannungsbereich definiert werden.

**Softwaresteuerung des Motors**

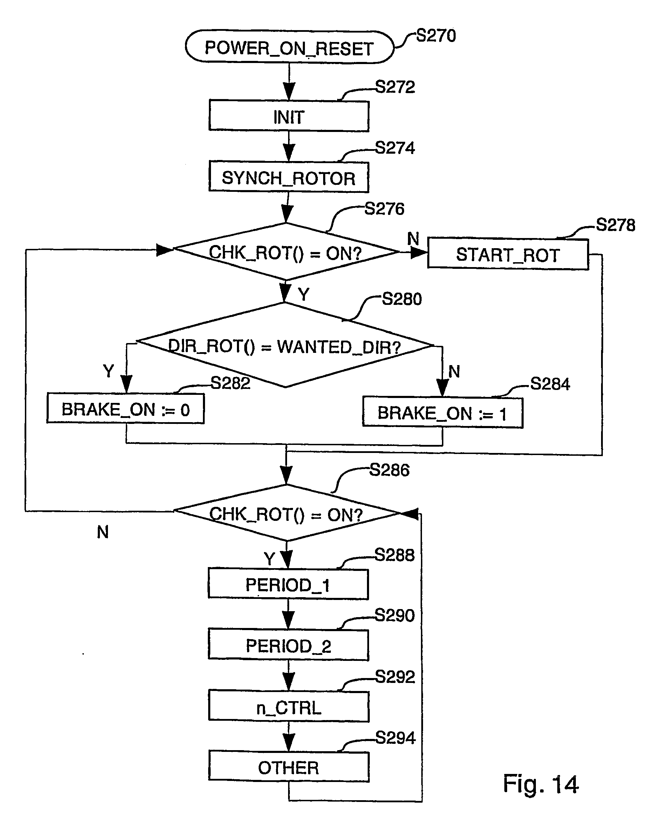

**Fig. 14** zeigt das in dem μC 32 ablaufende Hauptprogramm. Das Programm beginnt mit dem Schritt "POWER_ON_RESET" S270, zu dem der μC 23 nach dem Einschalten springt. In dem Schritt "INIT" S272 werden die Variablen initialisiert und die Betriebsparameter abgefragt, beispielsweise über die Datenleitung 92 aus Fig. 1. In dem Schritt "SYNCH_ROTOR" S274 wird der Ablauf des Programms mit einer eventuell vorhandenen Drehung des Rotors synchronisiert, damit diese ggf. ausgenützt werden kann. Im Schritt S276 wird über eine Routine "CHK_ROT()" überprüft, ob sich der Rotor dreht oder nicht. Falls der Rotor sich dreht, so wird im Schritt S280 überprüft, ob er sich in die gewünschte Richtung dreht. Dies kann wie oben beschrieben bei einem Motor mit Reluktanzmoment beispielsweise über die Steigung der induzierten Spannung ermittelt werden. Falls sich der Rotor in die richtige Richtung dreht, wird im Schritt S282 eine Variable BRAKE_ON auf 0 gesetzt. Dies zeigt an, dass sich der Rotor bereits in die richtige Richtung dreht und eine normale Kommutierung erfolgen kann. Falls sich der Rotor jedoch in die falsche Richtung dreht, so wird im Schritt S284 die Variable BRAKE_ON auf 1 gesetzt. Dies zeigt an, dass eine Bremsung des Rotors erfolgen soll. Diese kann beispielsweise dadurch erfolgen, dass in der entsprechenden Kommutierungsperiode die Bestromung in die umgekehrte Richtung erfolgt.

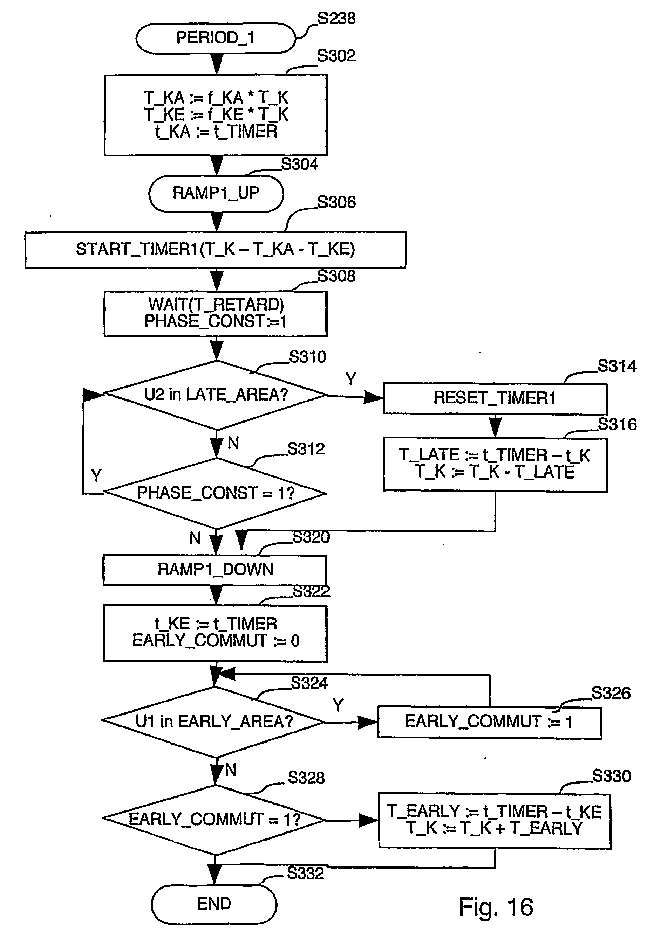

Falls im Schritt S276 ein Stillstand des Rotors festgestellt wird, wird im Schritt "START_ROT" S278 der Rotor durch Bestromung in Bewegung versetzt. In Schritt S286 beginnt die Hauptschleife, und es wird überprüft, ob sich der Rotor weiterhin bewegt. Falls dies nicht der Fall ist, erfolgt ein Sprung zurück zum Schritt S276. Falls sich der Rotor jedoch dreht, erfolgt in dem Schritt "PERIOD_1" S288 die Bestromung für die erste Kommutierungsperiode. Die Routine PERIOD_1 ist in Fig. 16 näher ausgeführt.

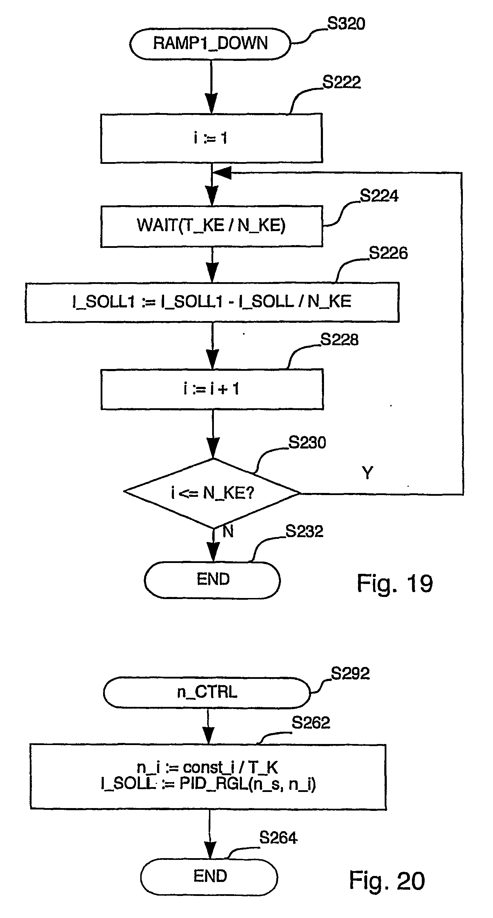

Im Schritt "PERIOD_2" S290 erfolgt die Bestromung für die zweite Kommutierungsperiode, also in die entgegengesetzte Richtung. Im Schritt "n_CTRL" S292 findet der Drehzahlregelungsberechnungsvorgang statt. Dieser ist näher in Fig. 20 dargestellt.

Im Schritt "OTHER" S294 finden weitere für den Ablauf des Motors notwendige Schritte statt. Es wird beispielsweise die Ein-/Ausgabe durchgeführt, und im Fehlerfall werden Fehlersignale ausgegeben.

Nach dem Schritt S294 erfolgt ein Sprung zurück zum Schritt S286, und die folgende Bestromung findet statt.

**Rampe**

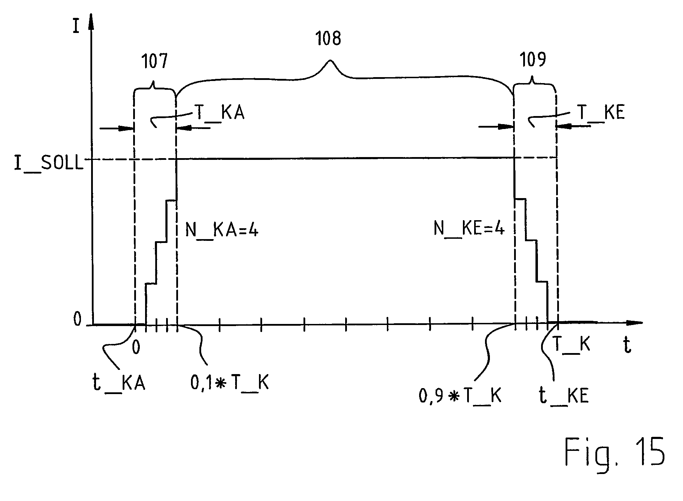

**Fig. 15** zeigt ein Ausführungsbeispiel für einen Kommutierungsvorgang, bei dem der Statorstrang 16 aus Fig. 1 bestromt wird.

In einem Kommutierungsabschlussvorgang 107 wird der Strom I1 in vier Stufen (N_KA = 4) von dem Wert I1 = 0 A auf den dem Sollwert I_SOLL entsprechenden Wert erhöht. Daraufhin folgt eine Phase 108, während der eine konstante Bestromung mit dem Wert I1 = I_SOLL durchgeführt wird. Danach folgt der Kommutierungseinleitungsvorgang 109, während dessen der Strom I1 in vier Stufen (N_KE = 4) rampenförmig von dem Wert I1 = I_SOLL auf den Wert I1 = 0 vermindert wird.

In diesem Ausführungsbeispiel werden die Zeitdauer T_KA des Kommutierungsabschlussvorgangs 107 und die Zeitdauer T_KE des Kommutierungseinleitungsvorgangs 109 aus der Kommutierungszeitdauer T_K berechnet. Die Kommutierungsabschlusszeitdauer T_KA und die Kommutierungseinleitungszeitdauer T_KE werden so gewählt, dass sie jeweils 10 % der gesamten Kommutierungszeitdauer T_K einnehmen. Die Phase 108 der konstanten Bestromung nimmt die übrigen 80 % der Kommutierungszeitdauer ein. Allgemein werden die Werte T_KA und T_KE folgendermaßen gewählt:

$$T\_KA = f\_KA * T\_K \qquad\qquad (9)$$

$$T\_KE = f\_KE * T\_K \qquad\qquad (10)$$

mit

| | |
|---|---|
| T_KA: | Kommutierungsabschlusszeitdauer |
| f_KA: | Anteilfaktor für die Kommutierungsabschlusszeitdauer |
| T_K: | Gesamte Kommutierungszeitdauer |
| T_KE: | Kommutierungseinleitungszeitdauer |
| f_KE: | Anteilfaktor für die Kommutierungseinleitungszeitdauer |

Die Anteilsfaktoren f_KA und f_KE werden bevorzugt an den jeweiligen Motortyp und den jeweiligen Einsatzzweck des Elektromotors 10 angepasst und können dem μC 32 beispielsweise über die Schnittstelle 92 von dem Steuergerät 94 vorgegeben werden, vgl. Fig. 1.

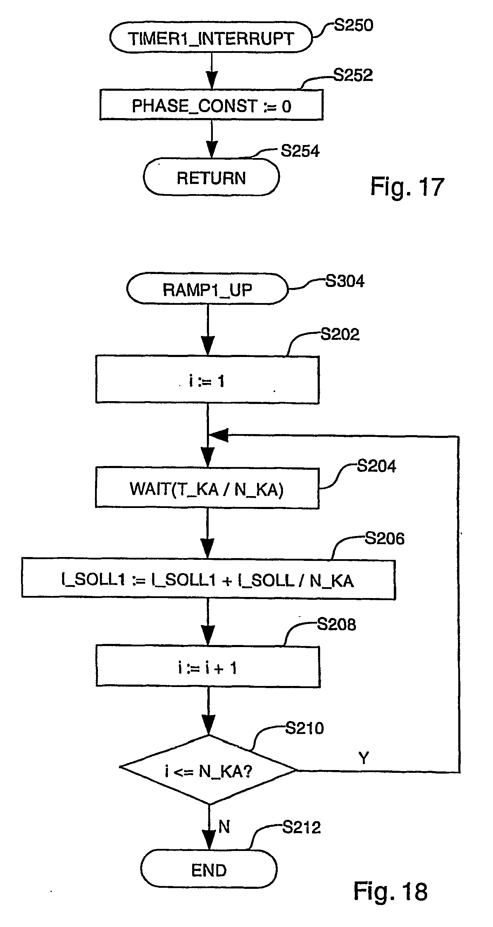

**Fig. 16** zeigt die Routine "PERIOD_1" S238. Im Schritt S302 werden die Kommutierungsabschlusszeitdauer T_KA und die Kommutierungseinleitungszeitdauer T_KE berechnet, und die Variable t_KA wird auf den momentanen Zeitwert t_TIMER gesetzt. Dabei entspricht der Kommutierungsabschlusszeitpunkt t_KA dem Startzeitpunkt des Kommutierungsabschlussvorgangs. Im Schritt S304 wird der Kommutierungsabschlussvorgang "RAMP1_UP" durchgeführt. Dieser ist in Fig. 18 beschrieben. Nach dem Ende des Kommutierungsabschlussvorgangs wird ein Timer TIMER1 über eine Funktion "START_TIMER1" gestartet. Über den Timer TIMER1 wird der Zeitraum für die Phase der konstanten Bestromung gemessen, welche sich aus der Kommutierungszeitdauer T_K abzüglich der Kommutierungsabschlusszeitdauer T_KA und der Kommutierungseinleitungszeitdauer T_KE ergibt. Nach dem Ablauf dieser Zeit erzeugt der Timer TIMER1 einen Interrupt, welcher eine in Fig. 20 dargestellte Interruptroutine "TIMER1_INTERRUPT" S250 aufruft. Im Schritt S308 wird eine Zeitdauer T_RETARD abgewartet, so dass die Messung, ob ein Spätkommutierungsvorgang vorliegt, nicht sofort erfolgt. Dies vermeidet Fehler auf Grund des zuvor durchgeführten Kommutierungsabschlussvorgangs. Im Schritt S310 wird überprüft, ob sich die induzierte Spannung im Spätkommutierungsspannungsbereich LATE_AREA befindet. Bei einem zweisträngigen Stator geschieht dies beispielsweise über die Auswertung des Signals U2.

Sofern in der Phase der konstanten Bestromung kein Spätkommutierungsvorgang stattfindet, wird jeweils vom Schritt S310 zum Schritt S312 gesprungen. Im Schritt S312 wird überprüft, ob die Phase der konstanten Bestromung weiterhin durchgeführt werden soll. Dies geschieht über die Variable PHASE_CONST, die zuvor auf 1 gesetzt wird, und die bei Ablauf der in den Timer TIMER1 eingegebenen Zeit durch die Interruptroutine "TIMER1_INTERRUPT" S250 aus Fig. 17 auf 0 gesetzt wird. Somit wird nach Ablauf der berechneten Zeit für die Phase der konstanten Bestromung ein Sprung zum Schritt S320 durchgeführt, und der Kommutierungseinleitungsvorgang wird durch Aufruf der Routine "RAMP1_DOWN" eingeleitet.

Findet dagegen während der Phase der konstanten Bestromung ein Spätkommutierungsvorgang statt, so wird vom Schritt S310 zum Schritt "RESET_TIMER1" S314 gesprungen. In diesem Schritt wird der Timer TIMER1 zurückgesetzt, so dass kein Interrupt mehr ausgelöst wird. Daraufhin wird im Schritt S316 die Spätkommutierungszeitdauer T_LATE aus der Differenz zwischen der aktuellen Zeit t_TIMER und dem Startzeitpunkt des Kommutierungsabschlussvorgangs t_KA berechnet. Weiterhin findet eine Korrektur der Kommutierungszeitdauer T_K statt, in dem von dieser die Spätkommutierungszeitdauer T_LATE abgezogen wird. Daraufhin wird zum Schritt S320 gesprungen, und der Kommutierungseinleitungsvorgang "RAMP1_DOWN" S320 wird eingeleitet.

Nach Beendigung des Kommutierungseinleitungsvorgangs wird im Schritt S322 eine Variable t_KE auf die aktuelle Zeit t_TIMER gesetzt, und eine Variable EARLY_COMMUT wird auf 0 gesetzt. Im Schritt S324 wird überprüft, ob ein Frühkommutierungsvorgang vorliegt. Dies geschieht beispielsweise über die Spannung U1, und es wird überprüft, ob sich diese in dem Frühkommutierungsbereich EARLY_AREA befindet. Bei einem Frühkommutierungsvorgang erfolgt ein Sprung zum Schritt S326, und die Variable EARLY_COMMUT wird auf 1 gesetzt, um einen Frühkommutierungsvorgang anzuzeigen. Daraufhin erfolgt ein Sprung zurück nach S324. Sobald sich die Spannung U1 außerhalb des Frühkommutierungsbereichs EARLY_AREA befindet, erfolgt ein Sprung zum Schritt S328. Im Falle eines Frühkommutierungsvorgangs wird zum Schritt S330 gesprungen, und dort wird die Frühkommutierungszeitdauer T_EARLY aus der Differenz zwischen der aktuellen Zeit t_TIMER und der im Schritt S322 gespeicherten Zeit t_KE berechnet. Weiterhin erfolgt eine Korrektur der Kommutierungszeitdauer T_K, in dem diese um die Frühkommutierungszeitdauer T_EARLY erhöht wird. Daraufhin erfolgt ein Sprung zum Ende S332.

**Fig. 17** zeigt die Interruptroutine "TIMER1_INTERRUPT" S250. Diese Routine wird nach Ablauf der im Schritt S306 aus Fig. 16 eingegebenen Zeitdauer aufgerufen. Im Schritt S252 wird die Variable PHASE_CONST auf 0 gesetzt, um das Ende der Phase der konstanten Bestromung anzuzeigen. Daraufhin erfolgt ein Rücksprung im Schritt S254, und das Hauptprogramm wird fortgesetzt.

**Fig. 18** zeigt die in dem μC 32 ablaufende Routine "RAMP1-UP" S200, welche den Kommutierungsabschlussvorgang 107 für den Statorstrang 16 durchführt.

In Schritt S202 wird die Kommutierungsabschlusszeitdauer T_KA aus der Kommutierungszeitdauer T_K berechnet, vgl. Beschreibung zu Fig. 9. Ein Schleifenzähler i wird auf 1 gesetzt. In Schritt S204 wird eine Zeit T_KA/N_KA gewartet. Dies ist die Zeit für eine Stufe des Kommutierungsabschlussvorgangs, und nach N_KA Stufen ist die gesamte Kommutierungsabschlusszeitdauer T_KA abgelaufen. Nach der Wartezeit in Schritt S204 wird im Schritt S206 der Stromsollwert I_SOLL1 für den Drehzahlregler I_RGL1 48 aus Fig. 1 um den Wert I_SOLL/N_KA erhöht. Dies führt dazu, dass nach N_KA Schritten der gewünschte Sollwert I_SOLL erreicht wird.

In Schritt S208 wird die Schleifenvariable i um 1 erhöht, und in Schritt S210 wird überprüft, ob noch nicht alle N_KA Schritte durchgeführt wurden. Falls Ja, erfolgt ein Sprung zurück zum Schritt S204, und die nächste Stufe der Rampe 107 wird erzeugt. Nach der Durchführung aller N_KA Schritte wird die Routine "RAMP1_UP" S200 beendet.

**Fig. 19** zeigt eine entsprechende Routine "RAMP1_DOWN" S220 für den Kommutierungseinleitungsvorgang 109, vgl. Fig. 9. Die Routine S220 entspricht vom Aufbau her der Routine "RAMP1_UP" S200, in der Schleife S224 bis S230 findet jedoch bei jedem Schritt zuerst die Erniedrigung des Sollwerts I_SOLL1 in Schritt S224 und daraufhin erst die Wartezeit in Schritt S226 statt.

Die entsprechenden Routinen "RAMP2_UP" und "RAMP2_DOWN" für die Vorgabe des Sollwerts I_SOLL2 für den Regler I_RGL2 68 entsprechen den Routinen S304 aus Fig. 18 und S320 aus Fig. 19, es wird jedoch der zweite Statorstrang 18 bestromt.

**Fig. 20** zeigt die Drehzahlregelung "n_CTRL" S292 aus Fig. 14. Im Schritt S262 wird die Istdrehzahl n_i berechnet, welche sich aus dem Quotienten aus einer Konstanten const_i und der Kommutierungszeitdauer T_K ergibt. Die berechnete Istdrehzahl n_i und die Solldrehzahl n_s werden in diesem Ausführungsbeispiel einem PID-Regler PID_RGL zugeführt, und dieser berechnet den Stromsollwert I_SOLL, der die Höhe des Stroms während der Phase der konstanten Bestromung angibt. Im Schritt S264 endet die Routine "n_CTRL".

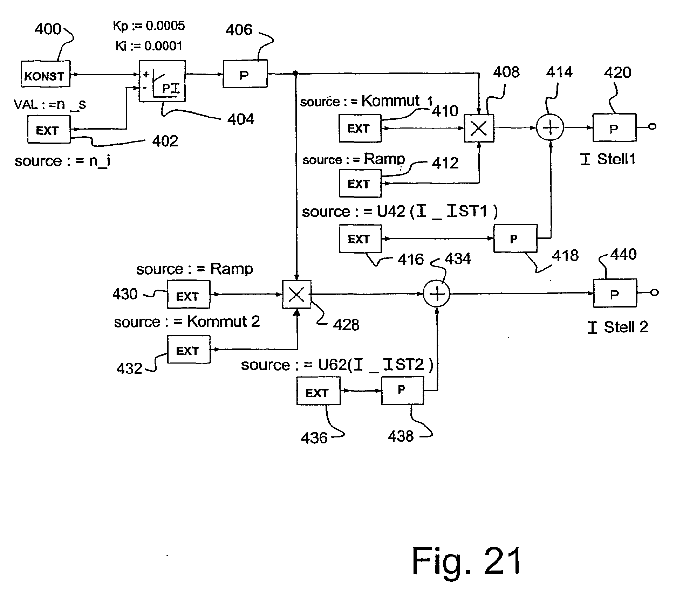

**Fig. 21** zeigt ein Blockschaltbild für einen Strom- und Drehzahlregler für einen erfindungsgemäßen Elektromotor 10. Ein Block 400 gibt eine Solldrehzahl n_s an einen Block 404, und ein Block 402 gibt eine Istdrehzahl n_i an den Block 404. Der Block 404 ist als PI-Regler ausgebildet, wobei der Verstärkungsfaktor des Proportionalanteils Kp = 0,0005 und der Verstärkungsfaktor des Integralanteils Ki = 0,0001 beträgt. Das Ausgangssignal des Blocks 404 wird einem Block 406 zugeführt, wobei der Block 406 als proportionales Glied, insbesondere als Verstärker ausgebildet ist. Das Ausgangssignal des Blocks 406 wird den Blöcken 408 und 428 zugeführt.

Dem Block 408 wird weiterhin ein Signal Kommut1 von einem Block 410 sowie ein Signal Ramp von einem Block 412 zugeführt. Das Signal Kommut1 gibt vor, wann der erste Strang bestromt werden soll, das Signal Ramp gibt die Rampenform vor, die abhängig von der Kommutierungszeitdauer T_K ist, und das Signal vom Block 406 gibt zur Beeinflussung der Drehzahl die Amplitude des in dem Block 408 entstehenden rampenförmigen Kommutierungssignals vor. Der Block 408 ist als Multiplizierer ausgebildet,.

Das vom Block 408 erzeugte Kommutierungssignal wird einem Block 414 zugeführt. Der Block 416 stellt ein Signal bereit, das der Spannung U42 am Fußpunktwiderstand 42 aus Fig. 1 und damit dem Stromistwertsignal I_IST1 entspricht. Das Signal des Blocks 416 wird dem Block 418 zugeführt, welcher als proportionales Glied, insbesondere als Verstärker, ausgebildet ist. Der Block 414 ist als Addierer ausgebildet, und aus der Differenz zwischen dem Stromsollwertsignal aus dem Block 408 und dem Stromistwertsignal aus dem Block 418 wird in dem als Stromregler arbeitenden Block 414 ein Stellwert erzeugt und über einen als Verstärker arbeitenden Block 420 als Stellwertsignal IStell1 für den ersten Statorstrang 16 ausgegeben. Dadurch, dass die Stromregelung erst kurz vor dem Block 420 eingreift, erhält man ein sehr schnelles Ansprechen der Strombegrenzung.

Die Blöcke 428, 430, 432, 434, 436, 438 und 440 entsprechen den Blöcken 408 bis 420, und dort wird das Stellsignal IStell2 für den zweiten Statorstrang 18 erzeugt.

Die Drehzahlregelung geschieht dadurch, dass das Stellwertsignal des PI-Reglers 404 dem Multiplikator 408 bzw. dem Multiplikator 428 zugeführt wird, wodurch die Höhe des Rampenstroms bestimmt wird. Bei einer vorgegebenen Erhöhung der Solldrehzahl n_s würde dann bspw. das dem Multiplikator 408 zugeführte Signal größer werden, was zu einem höheren Stromsollwert und damit zu einem höheren Motorstrom I1 bzw. I2 führt. Hierdurch dreht sich der Rotor 12 schneller, und es geschieht so lange eine Anpassung der Kommutierungszeitdauer T_K, bis der Elektromotor eine der Solldrehzahl n_s entsprechende Drehzahl n_i aufweist. Die Drehzahl des Motors wird somit durch ein Zusammenwirken des Drehzahlreglers 404 und des Stromreglers 414 bestimmt.

Naturgemäß sind im Rahmen der Erfindung viele Modifikationen möglich.

So kann bei einer einfacheren Ausgestaltung beispielsweise in Fig. 21 der Drehzahlregler entfallen, indem die Blöcke 400, 402, 404 und 406 durch einen Block ersetzt werden, der ein einstellbares Signal ausgibt. Dies führt zu einer Drehzahlsteuerung.

Ein erfindungsgemäßer Elektromotor wird bevorzugt zum Antrieb und/oder zur Bremsung eines Lüfters eingesetzt.

## Drehrichtungserkennung

Da der Motor 10 zur Erzeugung eines Reluktanz-Hilfsmoments ausgebildet ist, kann im Bereich 108 der konstanten Bestromung die Drehrichtung aus der Steigung der Spannung U1 102, der Spannung U1_ind, 104 der Spannung U2 103 und/oder der Spannung U2_ind ermittelt werden, vgl. Fig. 6.

Bei dem vorliegenden Motor ist die Spannung U1 102 ansteigend, und die Ableitung der Spannung U1, welche der Steigung entspricht, ist ebenfalls positiv. Bei einer Drehung in die entgegengesetzte Richtung wäre die Steigung bzw. die Ableitung der Spannung U1 dagegen negativ.

Die Messung der Drehrichtung kann dabei zumindest einmal nach bzw. während des Anlaufs erfolgen, oder sie kann auch in vorgegebenen Abständen erfolgen.

**Patentansprüche**

1. Verfahren zur Steuerung eines Elektromotors (10; 310), welcher einen permanentmagnetischen Rotor (12; 312) und einen Stator (14; 314) mit einer Wicklungsanordnung (15; 315) aufweist, welche entweder als einsträngige Wicklungsanordnung (315) oder als zweisträngige Wicklungsanordnung (15) ausgebildet ist, wobei jedem Wicklungsstrang (16, 18; 316) eine Endstufe (40, 60) und ein Stromregler (48, 68) zur Regelung des durch den Wicklungsstrang (16, 18; 316) fließenden Stromes (i1, i2; I1) zugeordnet sind, welches Verfahren die folgenden Schritte aufweist:

   A) In Abhängigkeit von einer vorgegebenen Kommutierungszeitdauer (T_K) wird eine Kommutierungsperiode definiert, während deren die Richtung des durch die Bestromung der Wicklung erzeugten Magnetfelds nicht verändert wird, während deren ferner ein Kommutierungsabschlussvorgang (107) und ein Kommutierungseinleitungsvorgang (109) stattfinden, und welche bei einem ersten Kommutierungszeitpunkt (t_K$_N$) startet und bei einem zweiten Kommutierungszeitpunkt (t_K$_{N+1}$) endet;
   B) außerhalb des Kommutierungsabschlussvorgangs und des Kommutierungseinleitungsvorgangs wird die Wicklungsanordnung (15) zumindest zeitweise mit einem im Wesentlichen konstanten Strom bestromt, und ein von der in der Wicklungsanordnung (15) induzierten Spannung (U1_ind, U2_ind) abhängiges Spannungssignal (U1, U2) wird erfasst, wobei die Bestromung der Wicklungsanordnung (15) mit dem im Wesentlichen konstanten Strom, der Kommutierungseinleitungsvorgang (109) und der Kommutierungsabschlussvorgang (107) durch eine Vorgabe entsprechender Strom-Sollwerte (I_SOLL1, I_SOLL2) für den mindestens einen Stromregler (48, 68) bewirkt werden;
   C) die Kommutierungszeitdauer (T_K) wird als Funktion des erfassten Spannungssignals (U1, U2) verändert, um diese an die Drehzahl des Rotors (12) anzupassen.

2. Verfahren nach Anspruch 1, bei welchem ein Spannungsbereich definiert ist, welcher einem für die gewählte Betriebsart des Motors (10) für die jeweilige Kommutierungsperiode ungeeigneten Bereich der induzierten Spannung (U1_ind, U2_ind) entspricht, und welcher im Folgenden als Spätkommutierungsspannungsbereich (140, 140', 140") bezeichnet wird, welches Verfahren den folgenden Schritt aufweist:

   C1) Die Kommutierungszeitdauer (T_K) wird verkleinert, wenn das Spannungssignal (U1, U2) zu einem Zeitpunkt vor Beginn des Kommutierungseinleitungsvorgangs (109) einen Wert des Spätkommutierungsspannungsbereichs annimmt, wobei dieser Zeitpunkt im Folgenden als Spätkommutierungszeitpunkt (t_spät) und ein solcher Vorgang als Spätkommutierungsvorgang bezeichnet wird.

3. Verfahren nach Anspruch 2, bei welchem der Spätkommutierungsspannungsbereich bei einem Wert beginnt, der im Wesentlichen dem Wert 0 V der induzierten Spannung (U1_ind, U2_ind) entspricht, und sich in den für die gewählte Betriebsart des Motors (10) für die jeweilige Kommutierungsperiode ungeeigneten Bereich der induzierten Spannung (U1_ind, U2_ind) erstreckt.

4. Verfahren nach Anspruch 2 oder 3, welches den folgenden Schritt aufweist:

   C2) Im Schritt C1 wird eine Spätkommutierungszeitdauer (T_spät) ermittelt, welche im Wesentlichen der Zeitdauer zwischen dem Spätkommutierungszeitpunkt (t_spät) und dem durch die bisherige Kommutierungszeitdauer (T_K) bestimmten zweiten Kommutierungszeitpunkt (t_K$_{N+1}$) entspricht, und die Kommutierungszeitdauer (T_K) wird in Abhängigkeit von der Spätkommutierungszeitdauer (T_spät) verkleinert, um diese Kommutierungszeitdauer zu verringern.

5. Verfahren nach einem der Ansprüche 2 bis 4, bei welchem das Spannungssignal (U1, U2) zumindest zeitweise im Wesentlichen der induzierten Spannung (U1_ind, U2_ind) entspricht, und welches den folgenden Schritt aufweist:

C3) Aus dem Spannungssignal wird ein digitales Spätkommutierungssignal (U1_dig) erzeugt, welches zwei Binärwerte aufweisen kann, und die Auswertung des Spannungssignals in Schritt C1) erfolgt über eine Auswertung des digitalen Spätkommutierungssignals, wobei einer der beiden Binärwerte des digitalen Spätkommutierungssignals dem Spätkommutierungsspannungsbereich entspricht.

6. Verfahren nach einem der Ansprüche 2 bis 5,
welches den folgenden Schritt aufweist:

D1) Im Falle eines Spätkommutierungsvorgangs wird nach dem Spätkommutierungszeitpunkt (t_spät) ein Kommutierungseinleitungsvorgang eingeleitet.

7. Verfahren nach einem der vorhergehenden Ansprüche,
bei welchem ein Spannungsbereich definiert ist, welcher einem für die gewählte Betriebsart des Motors (10) für die jeweilige Kommutierungsperiode ungeeigneten Bereich der induzierten Spannung (U1_ind, U2_ind) entspricht, und welcher im Folgenden als Frühkommutierungsspannungsbereich (140, 140', 140") bezeichnet wird,
welches Verfahren den folgenden Schritt aufweist:

C4) Die Kommutierungszeitdauer (T_K) wird vergrößert, wenn das Spannungssignal (U1, U2) zu einem Zeitpunkt nach Beendigung des Kommutierungseinleitungsvorgangs (109) und vor Beginn des Kommutierungsabschlussvorgangs (107) einen Wert des Frühkommutierungsspannungsbereichs annimmt, wobei ein solcher Vorgang als Frühkommutierungsvorgang bezeichnet wird.

8. Verfahren nach Anspruch 7, ,
bei welchem der Frühkommutierungsspannungsbereich bei einem Wert beginnt, der im Wesentlichen dem Wert 0 V der induzierten Spannung (U1_ind, U2_ind) entspricht, und sich in den für die gewählte Betriebsart des Motors (10) für die jeweilige Kommutierungsperiode ungeeigneten Bereich der induzierten Spannung (U1_ind, U2_ind) erstreckt.

9. Verfahren nach Anspruch 7 oder 8,
welches den folgenden Schritt aufweist:

C5) Im Schritt C4 wird eine Frühkommutierungszeitdauer (T_früh) ermittelt, welche im Wesentlichen der Zeitdauer entspricht, während der sich das Spannungssignal im Frühkommutierungsspannungsbereich befindet, und die Kommutierungszeitdauer (T_K) wird in Abhängigkeit von der Frühkommutierungszeitdauer (T_früh) vergrößert.

10. Verfahren nach Anspruch 9,
welches den folgenden Schritt aufweist:

C6) Im Schritt C5) wird die Frühkommutierungszeitdauer (T_früh) ermittelt, indem der Zeitpunkt festgestellt wird, zu dem das Spannungssignal den Frühkommutierungsspannungsbereich verlässt, wobei dieser Zeitpunkt im Folgenden Frühkommutierungszeitpunkt (t_früh) genannt wird,
und die Frühkommutierungszeitdauer wird als Zeitdauer zwischen dem Abschluss des Kommutierungseinleitungsvorgangs und dem Frühkommutierungszeitpunkt (t_früh) ermittelt.

11. Verfahren nach einem der Ansprüche 7 bis 10,
bei welchem das Spannungssignal (U1, U2) zumindest zeitweise im Wesentlichen der induzierten Spannung (U1_ind, U2_ind) entspricht, und
welches den folgenden Schritt aufweist:

C7) Aus dem Spannungssignal (U1, U2) wird ein digitales Frühkommutierungssignal (U1_dig) erzeugt, welches zwei Binärwerte aufweisen kann, und die Auswertung des Spannungssignals im Schritt C4) erfolgt über eine Auswertung des digitalen Frühkommutierungssignals, wobei einer der beiden Binärwerte des digitalen Frühkommutierungssignals dem Frühkommutierungsspannungsbereich entspricht.

12. Verfahren nach einem der Ansprüche 7 bis 11,
welches den folgenden Schritt aufweist:

D2) im Falle eines Frühkommutierungsvorgangs wird ein Kommutierungsabschlussvorgang eingeleitet, sobald das Spannungssignal den Frühkommutierungsspannungsbereich verlässt.

13. Verfahren nach einem der Ansprüche 7 bis 12,
welches den folgenden Schritt aufweist:

E1) Falls kein Frühkommutierungsvorgang stattfindet, wird der Kommutierungsabschlussvorgang (107) nach Beendigung des Kommutierungseinleitungsvorgangs (109) eingeleitet.

14. Verfahren nach einem der vorhergehenden Ansprüche,
welches den folgenden Schritt aufweist:

E2) Während des Kommutierungseinleitungsvorgang (109) wird die Größe des durch die Wicklung (15) fließende Strom (I1, I2) in Form einer Rampe kontrolliert vermindert.

15. Verfahren nach einem der vorhergehenden Ansprüche,
welches den folgenden Schritt aufweist:

E3) Während des Kommutierungsabschlussvorgang (107) wird die Größe des durch die Wicklung (15) fließende Strom (I1, I2) in Form einer Rampe kontrolliert vergrößert.

16. Verfahren nach Anspruch 14 oder 15,
bei welchem die Rampe Stufen aufweist.

17. Verfahren nach einem der vorhergehenden Ansprüche, bei weichem der durch die Wicklungsanordnung (15) fließende Strom ($I_1$, $I_2$) durch mindestens eine Endstufe (40, 60) beeinflusst wird.

18. Verfahren nach einem der vorhergehenden Ansprüche,
welches den folgenden Schritt aufweist:

F1) Der Stromsollwert (I_SOLL1, I_SOLL2) für die Bestromung (108) der Wicklung mit im Wesentlichen konstantem Strom wird durch einen Drehzahlregler (n_CTRL) vorgegeben (I_SOLL).

19. Verfahren nach einem der vorhergehenden Ansprüche,
bei welchem der Elektromotor (10) einen Mikroprozessor (32) aufweist, welches Verfahren den folgenden Schritt aufweist:

G1) Das Spannungssignal (U1, U2) wird durch den Mikroprozessor (32) ausgewertet;
G2) die Kommutierungszeitdauer (T_K) wird durch den Mikroprozessor (32) als Funktion des Spannungssignals (U1, U2) berechnet;
G3) der Stromsollwert (1_SOLL1, I_SOLL2) wird durch den Mikroprozessor in Abhängigkeit vom Spannungssignal (U1, U2) und von der Kommutierungszeitdauer (T_K) vorgegeben.

20. Verfahren nach einem der vorhergehenden Ansprüche,
bei welchem die Wicklung (i5) des Stators (14) einen einzigen Strang aufweist, welches Verfahren den folgenden Schritt aufweist:

H) Das Spannungssignal wird an dem Strang gemessen, während er bestromt wird.

21. Verfahren nach Anspruch 19,
welches den folgenden Schritt aufweist:

H1) Die induzierte Spannung wird während der Bestromung der Wicklung (15) mit im Wesentlichen konstantem Strom (I1) zumindest zeitweise aus dem Spannungssignal durch Eliminierung der durch den im Wesentlichen konstanten Strom erzeugten ohmschen Spannung (I1 * R1) an dem Strang ermittelt.

22. Verfahren nach Anspruch 21,
welches den folgenden Schritt aufweist:

H2) Zur Ermittlung der ohmschen Spannung (I1 * R1) wird der durch den Strang fließenden Strom (11) gemessen und mit einem vorgegebenen Wert für den Strangwiderstand (R1) multipliziert.

23. Verfahren nach Anspruch 21,
    bei welchem der Elektromotor (10) einen Stromregler (48, 68) zur Regelung des durch die Wicklung (15) fließenden Stromes (I1, I2) aufweist, dem ein Stromsollwert zuführbar ist,
    welches Verfahren den folgenden Schritt aufweist:

    H$_3$) Zur Ermittlung der ohmschen Spannung (I1 * R1) wird ein dem Stromsollwert entsprechender Wert mit einem vorgegebenen Wert für den Strangwiderstand (R1) multipliziert.

24. Verfahren nach einem der vorhergehenden Ansprüche,
    bei welchem die Wicklung (15) des Stators (14) mindestens zwei Stränge (16, 18) aufweist,
    welches Verfahren den folgenden Schritt aufweist:

    i) Während der Bestromung eines ersten Strangs (16) wird das Spannungssignal an einem zweiten Strang (18) gemessen, und während der Bestromung des zweiten Strangs (18) wird das Spannungssignal am ersten Strang (16) gemessen.

25. Verfahren nach einem der vorhergehenden Ansprüche,
    bei welchem ein Lüfter durch den Elektromotor angetrieben wird.

26. Elektromotor, welcher aufweist:

    Einen permanentmagnetischen Rotor (12; 312);
    einen Stator (14; 314) mit einer Wicklungsanordnung (15; 315), welche entweder als einsträngige Wicklungsanordnung (315) oder als zweisträngige Wicklungsanordnung (15) ausgebildet ist,
    wobei jedem Wicklungsstrang (16, 18; 316) eine Endstufe (40, 60) und ein Stromregler (48, 68) zur Regelung des durch den Wicklungsstrang (16, 18; 316) fließenden Stromes (i1, i2; I1) zugeordnet sind;
    und eine Steuervorrichtung (32), welche zur Ausführung folgender Schritte ausgebildet ist:

    A) In Abhängigkeit von einer vorgegebenen Kommutierungszeitdauer (T_K) wird eine Kommutierungsperiode definiert,
    während deren die Richtung des durch die Bestromung der Wicklung erzeugten Magnetfelds nicht verändert wird,
    während deren ferner ein Kommutierungsabschlussvorgang (107) und ein Kommutierungseinleitungsvorgang (109) stattfinden, und
    welche bei einem ersten Kommutierungszeitpunkt (t_K$_N$) startet und bei einem zweiten Kommutierungszeitpunkt (t_K$_{N+1}$) endet;
    B) außerhalb des Konnmutierungsabschlussvorgangs und des Kommutierungseinleitungsvorgangs wird die Wicklungsanordnung (15) zumindest zeitweise mit einem im Wesentlichen konstanten Strom bestromt, und ein von der in der Wicklungsanordnung (15) induzierten Spannung (U1_ind, U2_ind) abhängiges Spannungssignal (U1, U2) wird erfasst, wobei die Bestromung der Wicklungsanordnung (15) mit dem im Wesentlichen konstanten Strom, der Kommutierungseinleitungsvorgang (109) und der Kommutierungsabschlussvorgang (107) durch eine Vorgabe entsprechender Strom-Sollwerte (I_SOLL1, I_SOLL2) für den mindestens einen Stromregler (48, 68) bewirkt werden;
    C) die Kommutierungszeitdauer (T_K) wird als Funktion des erfassten Spannungssignals (U1, U2) verändert, um diese an die Drehzahl des Rotors (12) anzupassen.

27. Elektromotor nach Anspruch 26, welcher ferner aufweist:
    Eine Spannungserfassungsvorrichtung (86, 90) zur Erfassung eines von der in die Wicklungsanordnung (15) induzierten Spannung abhängigen Spannungssignals (U1, U2),
    eine Stromsollwertvorgabevorrichtung (36), der das Spannungssignal (U1, U2) zugeführt wird, und welche daraus ein für den Betrieb des Elektromotors geeignetes Stromsollwertsignal (I_SOLL1, I_SOLL2) erzeugt, welches einem Strom-regler (48/68)
    zugeführt wird, welcher die Endstufe (40, 60) derart beeinflusst, dass der durch die Wicklungsanordnung (15) fließende Strom (I1, I2) eine Funktion des Stromsollwertsignal ist.

**28.** Elektromotor nach Anspruch 27,
bei welchem die Stromsollwertvorgabevorrichtung (36) dazu ausgebildet ist, ein etwa trapezförmiges Stromsollwertsignal (I_SOLL1, I_SOLL2) zu erzeugen.

**29.** Elektromotor nach Anspruch 28,
bei welchem die Stromsollwertvorgabevorrichtung (36) dazu ausgebildet ist, während einer vorgegebenen Zeitspanne das Stromsollwertsignal (I_SOLL1, I_SOLL2) im Bereich des Dachs (108) des Trapezes im Wesentlichen auf einen vorgegebenen Dachwert (I_SOLL) zu setzen, um während dieser Zeitspanne einen im Wesentlichen konstanten Strom durch die Wicklungsanordnung (15) zu bewirken.

**30.** Elektromotor nach Anspruch 29,
welcher einen Drehzahlregler (32) zum Regeln der Drehzahl auf einen vorgegebenen Drehzahlsollwert (n_s) aufweist,
wobei der Drehzahlregler (32) einen Stellwert ausgibt, und bei welchem Elektromotor der Dachwert (I_SOLL) für das Stromsollwertsignal (I_SOLL1, I_SOLL2) im Bereich des Dachs des Trapezes eine Funktion dieses Stellwerts ist.

**31.** Elektromotor nach einem der Ansprüche 27 bis 30,
bei welchem die Stromsollwertvorgabevorrichtung (COMMUT) ein in einem Mikroprozessor (32) ablaufendes Programm aufweist.

**32.** Elektromotor nach einem der Ansprüche 27 bis 31,
bei welchem die Wicklungsanordnung (15) einen Wicklungss strang (16) mit einem ersten Anschluss (361) und einem zweiten Anschluss (362) aufweist, und bei welchem der erste Anschluss (361) und der zweite Anschluss (362) mit der Spannungserfassungsvorrichtung (36) zum Erfassen der in diesem Wicklungs strang (16) induzierten Spannung verbunden sind.

**33.** Elektromotor nach Anspruch 32,
bei welchem die Endstufe als Vollbrückenschaltung ausgebildet ist.

**34.** Elektromotor nach einem der Ansprüche 27 bis 31,
bei welchem die Wicklungsanordnung (15) mindestens zwei Wicklungsstränge (16, 18) aufweist, welche jeweils auf einer ersten Seite mit einer Spannungsquelle (UZK) und auf einer zweiten Seite mit einem Anschluss (MP_1, MP_2) sowie einem Schalter (40, 60) verbunden sind, und bei welcher der Anschluss (MP_1, MP_2) jeweils mit der Spannungserfassungsvorrichtung (86, 90) verbunden ist.

**35.** Elektromotor nach Anspruch 34,
bei welchem die Spannungsquelle (UZK) einen Spannungsquellenanschluss (MP_UZK) aufweist, welcher mit der Spannungserfassungsvorrichtung (86, 90) verbunden ist.

**36.** Elektromotor nach einem der Ansprüche 26 bis 37, welcher mit einem Lüfter verbunden ist.

**37.** Elektromotor nach einem der Ansprüche 26 bis 36,
bei welchem der Stromregler (48, 68) als analoger Stromregler ausgebildet ist.

**38.** Elektromotor nach einem der Ansprüche 26 bis 37,
welcher eine Digitalisierungsvorrichtung (86, 90) aufweist, welche in Abhängigkeit vom Spannungssignal ein digitales Spannungssignal erzeugt.

**39.** Elektromotor nach einem der Ansprüche 26 bis 38,
bei welchem der Stromregler (48, 68) derart ausgebildet ist, dass er eine Regelung auf einen Strom 0 A ermöglicht.


**Claims**

**1.** Method for controlling an electric motor (10; 310), which has a permanent-magnet rotor (12; 312) and a stator (14; 314) with a winding arrangement (15; 315), which is formed either as a single-phase winding arrangement (315) or as a two-phase winding arrangement (15), wherein an output stage (40, 60) and a current regulator (48, 68) for regulating the current (i1, i2; I1) flowing through the winding phase (16, 18; 316) are assigned to each winding phase (16, 18; 316), which method has the following steps:

A) Depending on a predetermined commutation duration (T_K), a commutation period is defined, during which the direction of the magnetic field generated by the current feed of the winding is not changed, during which furthermore a commutation ending process (107) and a commutation initiation process (109) take place, and which starts at a first commutation point ($t\_K_N$) and ends at a second commutation point ($t\_K_{N+1}$);

B) Outside the commutation ending process and the commutation initiation process the winding arrangement (15) is supplied at least at times with a substantially constant current, and a voltage signal (U1, U2) dependent on the voltage (U1_ind, U2_ind) induced in the winding arrangement (15) is detected, wherein the current feed of the winding arrangement (15) with the substantially constant current, the commutation initiation, process (109) and the commutation ending process (107) are effectuated by a specification of corresponding current target values (I_TARGET1, I_TARGET2) for the at least one current regulator (48, 68);

C) The commutation duration (T_K) is changed as a function of the detected voltage signal (U1, U2), in order to adapt this duration to the speed of the rotor (12).

2. Method according to claim 1, in which a voltage range is defined, which corresponds to an unsuitable range of the induced voltage (U1_ind, U2_ind) for the selected operating mode of the motor (10) for the respective commutation period, and which is described below as a late commutation voltage range (140, 140', 140"), which method has the following step:

C1) The commutation duration (T_K) is reduced if the voltage signal (U1, U2) assumes a value of the late commutation voltage range at a point prior to the start of the commutation initiation process (109), wherein this point is described below as a late commutation point (t_late) and such a process is described as a late commutation process.

3. Method according to claim 2, in which the late commutation voltage range begins at a value that substantially corresponds to the value 0 V of the induced voltage (U1_ind, U2_ind), and extends into the unsuitable range of the induced voltage (U1_ind, U2_ind) for the selected operating mode of the motor (10) for the respective commutation period.

4. Method according to claim 2 or 3, which has the following step:

C2) In step C1, a late commutation duration (T_late) is established, which substantially corresponds to the duration between the late commutation point (t_late) and the second commutation point ($t\_K_{N+1}$) determined by the previous commutation duration (T_K), and the commutation duration (T_K) is reduced as a function of the late commutation duration (T_late) in order to reduce this commutation duration.

5. Method according to one of claims 2 to 4, in which the voltage signal (U1, U2) corresponds at least at times substantially to the induced voltage (U1_ind, U2_ind), and which has the following step:

C3) From the voltage signal a digital late commutation signal (U1_dig) is generated, which can have two binary values, and the evaluation of the voltage signal in step C1) is carried out via an evaluation of the digital late commutation signal, wherein one of the two binary values of the digital late commutation signal corresponds to the late commutation voltage range.

6. Method according to one of claims 2 to 5, which has the following step:

D1) In the case of a late commutation process, a commutation initiation process is initiated after the late commutation point (t_late).

7. Method according to one of the preceding claims, in which a voltage range is defined, which corresponds to an unsuitable range of the induced voltage (U1_ind, U2_ind) for the selected operating mode of the motor (10) for the respective commutation period, and which is described below as an early commutation voltage range (140, 140', 140"), which method has the following step:

C4) The commutation duration (T_K) is increased if the voltage signal (U1, U2) assumes a value of the early commutation voltage range at a point following the end of the commutation initiation process (109) and prior to the start of the commutation ending process (107), wherein such a process is described as an early commutation process.

8. Method according to claim 7, in which the early commutation voltage range begins at a value that substantially corresponds to the value 0 V of the induced voltage (U1_ind, U2_ind), and extends into the unsuitable range of the induced voltage (U1_ind, U2_ind) for the selected operating mode of the motor (10) for the respective commutation period.

9. Method according to claim 7 or 8, which has the following step:

C5) In step C4, an early commutation duration (T_early) is established, which substantially corresponds to the duration during which the voltage signal is located in the early commutation voltage range, and the commutation duration (T_K) is increased as a function of the early commutation duration (T_early).

10. Method according to claim 9, which has the following step:

C6) In step C5) the early commutation duration (T_early) is established in that the point at which the voltage signal leaves the early commutation voltage range is established, wherein this point is named early commutation point (t_early) below, and the early commutation duration is determined as the duration between the conclusion of the commutation initiation process and the early commutation point (t_early).

11. Method according to one of claims 7 to 10, in which the voltage signal (U1, U2) corresponds at least at times substantially to the induced voltage (U1_ind, U2_ind), and which has the following step:

C7) From the voltage signal (U1, U2) a digital early commutation signal (U1_dig) is generated, which can have two binary values, and the evaluation of the voltage signal in step C4) is carried out via an evaluation of the digital early commutation signal, wherein one of the two binary values of the digital early commutation signal corresponds to the early commutation voltage range.

12. Method according to one of claims 7 to 11, which has the following step:

D2) In the case of an early commutation process, a commutation ending process is initiated as soon as the voltage signal leaves the early commutation voltage range.

13. Method according to one of claims 7 to 12, which has the following step:

E1) If no early commutation process takes place, the commutation ending process (107) is initiated following ending of the commutation initiation process (109).

14. Method according to one of the preceding claims, which has the following step:

E2) During the commutation initiation process (109), the magnitude of the current (I1, 12) flowing through the winding (15) is reduced in a controlled manner in the form of a ramp.

15. Method according to one of the preceding claims, which has the following step:

E3) During the commutation ending process (107), the magnitude of the current (I1, 12) flowing through the winding (15) is increased in a controlled manner in the form of a ramp.

16. Method according to claim 14 or 15, in which the ramp has steps.

17. Method according to one of the preceding claims, in which the current (I1, 12) flowing through the winding arrangement (15) is influenced by at least one output stage (40, 60).

18. Method according to one of the preceding claims, which has the following step:

F1) The current target value (I_TARGET1, I_TARGET2) for the current feed (108) of the winding with substantially constant current is predetermined (I_TARGET) by a speed governor (n_CTRL).

**19.** Method according to one of the preceding claims, in which the electric motor (10) has a microprocessor (32), which method has the following step:

> G1) The voltage signal (U1, U2) is evaluated by the microprocessor (32);
> G2) The commutation duration (T_K) is calculated by the microprocessor (32) as a function of the voltage signal (U1, U2);
> G3) The current target value (I_TARGET1, I_TARGET2) is predetermined by the microprocessor as a function of the voltage signal (U1, U2) and of the commutation duration (T_K).

**20.** Method according to one of the preceding claims, in which the winding (15) of the stator (14) has a single phase, which method has the following step:

> H) The voltage signal is measured at the phase while it is being supplied with current.

**21.** Method according to claim 19, which has the following step:

> H1) The induced voltage is determined at the phase during the current feed of the winding (15) with substantially constant current (I1) at least at times from the voltage signal by elimination of the ohmic voltage (I1*R1) generated by the substantially constant current.

**22.** Method according to claim 21, which has the following step:

> H2) To determine the ohmic voltage (I1*R1), the current (I1) flowing through the phase is measured and multiplied by a predetermined value for the phase resistance (R1).

**23.** Method according to claim 21, in which the electric motor (10) has a current regulator (48, 68) to regulate the current (I1, 12) flowing through the winding (15), to which regulator a current target value can be supplied, which method has the following step:

> H3) To determine the ohmic voltage (I1*R1), a value corresponding to the current target value is multiplied by a predetermined value for the phase resistance (R1).

**24.** Method according to one of the preceding claims, in which the winding (15) of the stator (14) has at least two phases (16, 18), which method has the following step:

> I) During the current feed of a first phase (16), the voltage signal is measured at a second phase (18), and during the current feed of the second phase (18), the voltage signal is measured at the first phase (16).

**25.** Method according to one of the preceding claims, in which a fan is driven by the electric motor.

**26.** Electric motor, which has: a permanent-magnet rotor (12; 312); a stator (14; 314) with a winding arrangement (15; 315), which is formed either as a single-phase winding arrangement (315) or as a two-phase winding arrangement (15), wherein an output stage (40, 60) and a current regulator (48, 68) for regulating the current (i1, i2; I1) flowing through the winding phase (16, 18; 316) are assigned to each winding phase (16, 18; 316); and a control device (32), which is formed to execute the following steps:

> A) Depending on a predetermined commutation duration (T_K), a commutation period is defined, during which the direction of the magnetic field generated by the current feed of the winding is not changed, during which furthermore a commutation ending process (107) and a commutation initiation process (109) take place, and which starts at a first commutation point (t_$K_N$) and ends at a second commutation point (t_$K_{N+1}$) ;
> B) Outside the commutation ending process and the commutation initiation process the winding arrangement (15) is supplied at least at times with a substantially constant current, and a voltage signal (U1, U2) dependent on the voltage (U1_ind, U2_ind) induced in the winding arrangement (15) is detected, wherein the current feed of the winding arrangement (15) with the substantially constant current, the commutation initiation process (109) and the commutation ending process (107) are effectuated by a specification of corresponding current target values (I_TARGET1, I_TARGET2) for the at least one current regulator (48, 68);
> C) The commutation duration (T_K) is changed as a function of the detected voltage signal (U1, U2), in order to adapt this duration to the speed of the rotor (12).

**27.** Electric motor according to claim 26, which has furthermore:

a voltage detection device (86, 90) for detecting a voltage signal (U1, U2) dependent on the voltage induced in the winding arrangement (15), a current target value specification device (36), to which the voltage signal (U1, U2) is supplied, and which generates therefrom a suitable current target value signal (I_TARGET1, I_TARGET2) for the operation of the electric motor, which signal is supplied to a current regulator (48, 68), which influences the output stage (40, 60) such that the current (I1, I2) flowing through the winding arrangement (15) is a function of the current target value signal.

**28.** Electric motor according to claim 27, in which the current target value specification device (36) is formed to generate an approximately trapezoidal current target value signal (I_TARGET1, I_TARGET2).

**29.** Electric motor according to claim 28, in which the current target value specification device (36) is formed to set the current target value signal (I_TARGET1, I_TARGET2) in the area of the top (108) of the trapezoid substantially at a predetermined top value (I_TARGET) during a predetermined time span, in order during this time span to effectuate a substantially constant current through the winding arrangement (15).

**30.** Electric motor according to claim 29, which has a speed governor (32) for regulating the speed to a predetermined speed target value (n_s), wherein the speed governor (32) emits a control value, and in which electric motor the top value (I_TARGET) for the current target value signal (I_TARGET1, I_TARGET2) in the area of the top of the trapezoid is a function of this control value.

**31.** Electric motor according to one of claims 27 to 30, in which the current target value specification device (COMMUT) has a program running in a microprocessor (32).

**32.** Electric motor according to one of claims 27 to 31, in which the winding arrangement (15) has a winding phase (16) with a first connection (361) and a second connection (362), and in which the first connection (361) and the second connection (362) are connected to the voltage detection device (36) for detecting the voltage induced in this winding phase (16).

**33.** Electric motor according to claim 32, in which the output stage is formed as a full bridge circuit.

**34.** Electric motor according to one of claims 27 to 31, in which the winding arrangement (15) has at least two winding phases (16, 18), which are each connected on a first side to a voltage source (UZK) and on a second side to a connection (MP_1, MP_2) as well as a switch (40, 60), and in which the connection (MP_1, MP_2) is connected respectively to the voltage detection device (86, 90).

**35.** Electric motor according to claim 34, in which the voltage source (UZK) has a voltage source connection (MP_UZK), which is connected to the voltage detection device (86, 90).

**36.** Electric motor according to one of claims 26 to 37, which is connected to a fan.

**37.** Electric motor according to one of claims 26 to 36, in which the current regulator (48, 68) is formed as an analog current regulator.

**38.** Electric motor according to one of claims 26 to 37, which has a digitalisation device (86, 90), which generates a digital voltage signal as a function of the voltage signal.

**39.** Electric motor according to one of claims 26 to 38, in which the current regulator (48, 68) is formed such that it enables regulation to a current 0 A.

**Revendications**

**1.** Procédé de commande d'un moteur électrique (10 ; 310), lequel présente un rotor (12 ; 312) à aimant permanent, un stator (14 ; 314) avec un agencement d'enroulement (15 ; 315), lequel est conçu soit comme un agencement d'enroulement à une phase (315), soit comme un agencement d'enroulement à deux phases (15), dans lequel un étage final (40, 60) et un régulateur de courant (48, 68) sont associés à chaque enroulement de phase (16, 18 ; 316) pour réguler le courant (i1, i2 ; I1) qui circule à travers l'enroulement de phase (16, 18 ; 316), lequel procédé présente les étapes suivantes :

A) en fonction d'une durée de commutation prescrite (T_K), il est défini une période de commutation pendant laquelle le sens du champ magnétique généré par l'alimentation en courant de l'enroulement n'est pas modifié,

pendant laquelle ont lieu en outre un processus d'achèvement de commutation (107) et un processus de déclenchement de commutation (109), et

laquelle commence à un premier instant de commutation (t_K$_N$) et se termine à un deuxième instant de commutation (t_K$_{N+1}$) ;

B) en dehors du processus d'achèvement de commutation et du processus de déclenchement de commutation, l'agencement d'enroulement (15) est alimenté au moins par moments avec un courant sensiblement constant, et un signal de tension (U1, U2) dépendant de la tension (U1_ind, U2_ind) induite dans l'agencement d'enroulement (15) est détecté, l'alimentation de l'agencement d'enroulement (15) avec le courant sensiblement constant, le processus de déclenchement de commutation (109) et le processus d'achèvement de commutation (107) étant déterminés par une prescription de valeurs de consigne de courant (I_SOLL1, I_SOLL2) correspondantes pour ledit au moins un régulateur de courant (48, 68) ;

C) la durée de commutation (T_K) est modifiée en fonction du signal de tension (U1, U2) détecté afin d'adapter celle-ci à la vitesse de rotation du rotor (12).

2. Procédé selon la revendication 1,
dans lequel il est défini une plage de tension qui correspond à une plage de la tension induite (U1_ind, U2_ind) inappropriée au mode de fonctionnement choisi du moteur (10) pour la période de commutation respective, et laquelle est désignée dans la suite par plage de tension de commutation retardée (140, 140', 140"), lequel procédé présente l'étape suivante :

C1) la durée de commutation (T_K) est réduite si le signal de tension (U1, U2) prend une valeur de la plage de tension de commutation retardée à un instant précédant le début du processus de déclenchement de commutation (109), cet instant étant désigné dans la suite par instant de commutation retardée (t_spät) et un tel processus par processus de commutation retardée.

3. Procédé selon la revendication 2,
dans lequel la plage de tension de commutation retardée commence à une valeur qui correspond sensiblement à la valeur 0 V de la tension induite (U1_ind, U2_ind) et s'étend dans la plage de tension induite (U1_ind, U2_ind) inappropriée au mode de fonctionnement choisi du moteur (10) pour la période de commutation respective.

4. Procédé selon la revendication 2 ou 3,
lequel procédé présente l'étape suivante :

C2) à l'étape C1, il est déterminé une durée de commutation retardée (T_spät) qui correspond sensiblement à la durée entre l'instant de commutation retardée (t_spät) et le deuxième instant de commutation (t_K$_{N+1}$) déterminé par la durée de commutation (T_K) existante,
et la durée de commutation (T_K) est réduite en fonction de la durée de commutation retardée (T_spät) pour diminuer cette durée de commutation.

5. Procédé selon une des revendications 2 à 4,
dans lequel le signal de tension (U1, U2) correspond au moins par moments sensiblement à la tension induite (U1_ind, U2_ind), et
lequel présente l'étape suivante :

C3) à partir du signal de tension, il est généré un signal numérique de commutation retardée (U1_dig) qui peut présenter deux valeurs binaires, et l'évaluation du signal de tension à l'étape C1) est effectuée par une évaluation du signal numérique de commutation retardée, une des deux valeurs binaires du signal numérique de commutation retardée correspondant à la plage de tension de commutation retardée.

6. Procédé selon une des revendications 2 à 5,
lequel présente l'étape suivante :

D1) dans le cas d'un processus de commutation retardée, un processus de déclenchement de commutation est engagé après l'instant de commutation retardée (t_spät).

**7.** Procédé selon une des revendications précédentes,
dans lequel il est défini une plage de tension, laquelle correspond à une plage de tension induite (U1_ind, U2_ind) inappropriée au mode de fonctionnement choisi du moteur (10) pour la période de commutation respective, et laquelle est désignée dans la suite par plage de tension de commutation avancée (140, 140', 140"), lequel procédé présente l'étape suivante :

C4) la durée de commutation (T_K) est augmentée si le signal de tension (U1, U2) prend une valeur de la plage de tension de commutation avancée à un instant suivant la fin du processus de déclenchement de commutation (109) et précédant le début du processus d'achèvement de commutation (107), un tel processus étant désigné par processus de commutation avancée.

**8.** Procédé selon la revendication 7,
dans lequel la plage de tension de commutation avancée commence à une valeur qui correspond sensiblement à la valeur 0 V de la tension induite (U1_ind, U2_ind) et s'étend dans la plage de tension induite (U1_ind, U2_ind) inappropriée au mode de fonctionnement choisi du moteur (10) pour la période de commutation respective.

**9.** Procédé selon la revendication 7 ou 8,
lequel présente l'étape suivante :

C5) à l'étape C4, il est déterminé une durée de commutation avancée (T_früh) qui correspond sensiblement à la durée pendant laquelle le signal de tension se trouve dans la plage de tension de commutation avancée, et la durée de commutation (T_K) est augmentée en fonction de la durée de commutation avancée (T_früh).

**10.** Procédé selon la revendication 9,
lequel présente l'étape suivante :

C6) à l'étape C5), la durée de commutation avancée (T_früh) est déterminée en déterminant l'instant auquel le signal de tension quitte la plage de tension de commutation avancée, cet instant étant appelé dans la suite instant de commutation avancée (t_früh),
et la durée de commutation avancée est déterminée comme durée entre l'achèvement du processus de déclenchement de commutation et l'instant de commutation avancée (t_früh).

**11.** Procédé selon une des revendications 7 à 10,
dans lequel le signal de tension (U1, U2) correspond au moins par moments sensiblement à la tension induite (U1_ind, U2_ind), et
lequel présente l'étape suivante :

C7) à partir du signal de tension (U1, U2), il est généré un signal numérique de commutation avancée (U1_dig), lequel peut présenter deux valeurs binaires, et l'évaluation du signal de tension à l'étape C4) est effectuée par une évaluation du signal numérique de commutation avancée, une des deux valeurs binaires du signal numérique de commutation avancée correspondant à la plage de tension de commutation avancée.

**12.** Procédé selon une des revendications 7 à 11,
lequel présente l'étape suivante :

D2) dans le cas d'un processus de commutation avancée, un processus d'achèvement de commutation est engagé dès que le signal de tension quitte la plage de tension de commutation avancée.

**13.** Procédé selon une des revendications 7 à 12,
lequel présente l'étape suivante :

E1) si aucun processus de commutation avancée n'a lieu, le processus d'achèvement de commutation (107) est engagé après la fin du processus de déclenchement de commutation (109).

**14.** Procédé selon une des revendications précédentes,

lequel présente l'étape suivante :

E2) pendant le processus de déclenchement de commutation (109), la valeur du courant (I1, I2) qui circule à travers l'enroulement (15) est réduite de manière contrôlée sous la forme d'une rampe.

**15.** Procédé selon une des revendications précédentes,
lequel présente l'étape suivante :

E3) pendant le processus d'achèvement de commutation (107), la valeur du courant (I1, I2) qui circule à travers l'enroulement (15) est augmentée de manière contrôlée sous la forme d'une rampe.

**16.** Procédé selon la revendication 14 ou 15,
dans lequel la rampe présente des paliers.

**17.** Procédé selon une des revendications précédentes,
dans lequel le courant (I1, I2) qui circule à travers l'agencement d'enroulement (15) est influencé par au moins un étage final (40, 60).

**18.** Procédé selon une des revendications précédentes,
lequel présente l'étape suivante:

F1) la valeur de consigne de courant (I_SOLL1, I_SOLL2) pour l'alimentation (108) de l'enroulement avec un courant sensiblement constant est prescrite (I_SOLL) par un régulateur de vitesse (n_CTRL).

**19.** Procédé selon une des revendications précédentes,
dans lequel le moteur électrique (10) présente un microprocesseur (32),
lequel procédé présente les étapes suivantes :

G1) le signal de tension (U1, U2) est évalué par le microprocesseur (32) ;
G2) la durée de commutation (T_K) est calculée par le microprocesseur (32) en fonction du signal de tension (U1, U2) ;
G3) la valeur de consigne de courant (I_SOLL1, I_SOLL2) est prescrite par le microprocesseur en fonction du signal de tension (U1, U2) et de la durée de commutation (T_K).

**20.** Procédé selon une des revendications précédentes,
dans lequel l'enroulement (15) du stator (14) présente une seule phase,
lequel procédé présente l'étape suivante :

H) le signal de tension est mesurée sur la phase pendant qu'elle est alimentée en courant.

**21.** Procédé selon la revendication 19,
lequel présente l'étape suivante :

H1) la tension induite est déterminée pendant l'alimentation de l'enroulement (15) avec un courant sensiblement constant (I1) au moins par moments à partir du signal de tension par élimination de la tension ohmique (I1 * R1) générée sur la phase par le courant sensiblement constant.

**22.** Procédé selon la revendication 21,
lequel présente l'étape suivante :

H2) pour déterminer la tension ohmique (I1 * R1), le courant (I1) qui circule à travers la phase est mesuré et multiplié par une valeur prescrite pour la résistance de phase (R1).

**23.** Procédé selon la revendication 21,
dans lequel le moteur électrique (10) présente un régulateur de courant (48, 68) pour réguler le courant (I1, I2) qui circule à travers l'enroulement (15), auquel une valeur de consigne de courant peut être amenée,
lequel procédé présente l'étape suivante :

H3) pour déterminer la tension ohmique (I1 * R1), une valeur correspondant à la valeur de consigne de courant est multipliée par une valeur prescrite pour la résistance de phase (R1).

24. Procédé selon une des revendications précédentes,
dans lequel l'enroulement (15) du stator (14) présente au moins deux phases (16, 18),
lequel procédé présente l'étape suivante :

I) pendant l'alimentation en courant d'une première phase (16), le signal de tension est mesuré sur une deuxième phase (18), et pendant l'alimentation en courant de la deuxième phase (18), le signal de tension est mesuré sur la première phase (16).

25. Procédé selon une des revendications précédentes,
dans lequel un ventilateur est entraîné par le moteur électrique.

26. Moteur électrique, lequel présente :

un rotor (12 ; 312) à aimant permanent ;
un stator (14 ; 314) avec un agencement d'enroulement (15 ; 315), lequel est conçu soit comme un agencement d'enroulement à une phase (315), soit comme un agencement d'enroulement à deux phases (15),
dans lequel un étage final (40, 60) et un régulateur de courant (48, 68) sont associés à chaque enroulement de phase (16, 18 ; 316) pour réguler le courant (i1, i2 ; I1) qui circule à travers l'enroulement de phase (16, 18 ; 316) ;
et un dispositif de commande (32), lequel est conçu pour exécuter les étapes suivantes :

A) en fonction d'une durée de commutation prescrite (T_K), il est défini une période de commutation pendant laquelle le sens du champ magnétique généré par l'alimentation en courant de l'enroulement n'est pas modifié,
pendant laquelle ont lieu en outre un processus d'achèvement de commutation (107) et un processus de déclenchement de commutation (109), et
laquelle commence à un premier instant de commutation (t_$K_N$) et se termine à un deuxième instant de commutation (t_$K_{N+1}$) ;
B) en dehors du processus d'achèvement de commutation et du processus de déclenchement de commutation, l'agencement d'enroulement (15) est alimenté au moins par moments avec un courant sensiblement constant, et un signal de tension (U1, U2) dépendant de la tension (U1_ind, U2_ind) induite dans l'agencement d'enroulement (15) est détecté, l'alimentation de l'agencement d'enroulement (15) avec le courant sensiblement constant, le processus de déclenchement de commutation (109) et le processus d'achèvement de commutation (107) étant déterminés par une prescription de valeurs de consigne de courant (I_SOLL1, I_SOLL2) correspondantes pour ledit au moins un régulateur de courant (48, 68) ;
C) la durée de commutation (T_K) est modifiée en fonction du signal de tension (U1, U2) détecté afin d'adapter celle-ci à la vitesse de rotation du rotor (12).

27. Moteur électrique selon la revendication 26, lequel présente en outre :

un dispositif de détection de tension (86, 90) pour détecter un signal de tension (U1, U2) dépendant de la tension induite dans l'agencement d'enroulement (15),
un dispositif de prescription de valeur de consigne de courant (36) auquel le signal de tension (U1, U2) est amené et qui génère à partir de celui-ci un signal de valeur de consigne de courant (I_SOLL1, I_SOLL2) approprié au fonctionnement du moteur électrique, lequel est amené à un régulateur de courant (48, 68) qui influence l'étage final (40, 60) de façon que le courant (I1, 12) qui circule à travers l'agencement d'enroulement (15) soit une fonction du signal de valeur de consigne de courant.

28. Moteur électrique selon la revendication 27,
dans lequel le dispositif de prescription de valeur de consigne de courant (36) est conçu pour générer un signal de valeur de consigne de courant (I_SOLL1, I_SOLL2) approximativement trapézoïdal.

29. Moteur électrique selon la revendication 28,
dans lequel le dispositif de prescription de valeur de consigne de courant (36) est conçu pour, pendant un intervalle de temps prescrit, mettre le signal de valeur de consigne de courant (I_SOLL1, I_SOLL2) dans la zone du toit (108) du trapèze sensiblement à une valeur de toit prescrite (I_SOLL) pour, pendant cet intervalle de temps, générer un courant sensiblement constant à travers l'agencement d'enroulement (15).

**30.** Moteur électrique selon la revendication 29,
lequel présente un régulateur de vitesse (32) pour réguler la vitesse de rotation sur une valeur de consigne de vitesse de rotation prescrite (n_s),
le régulateur de vitesse (32) délivrant une valeur de réglage, et
dans lequel moteur électrique la valeur de toit (I_SOLL) pour le signal de valeur de consigne de courant (I_SOLL1, I_SOLL2) dans la zone du toit du trapèze est une fonction de cette valeur de réglage.

**31.** Moteur électrique selon une des revendications 27 à 30,
dans lequel le dispositif de prescription de valeur de consigne de courant (COMMUT) présente un programme qui s'exécute dans un microprocesseur (32).

**32.** Moteur électrique selon une des revendications 27 à 31,
dans lequel l'agencement d'enroulement (15) présente un enroulement de phase (16) avec une première connexion (361) et une deuxième connexion (362), et dans lequel la première connexion (361) et la deuxième connexion (362) sont reliées au dispositif de détection de tension (36) servant à détecter la tension induite dans cet enroulement de phase (16).

**33.** Moteur électrique selon la revendication 32,
dans lequel l'étage final est réalisé sous la forme d'un circuit en pont intégral.

**34.** Moteur électrique selon une des revendications 27 à 31,
dans lequel l'agencement d'enroulement (15) présente au moins deux enroulements de phase (16, 18), lesquels sont reliés chaque fois d'un premier côté à une source de tension (UZK) et d'un deuxième côté à une connexion (MP_1, MP_2) ainsi qu'à un commutateur (40, 60), et dans lequel la connexion (MP1_1, MP_2) est reliée chaque fois au dispositif de détection de tension (86, 90).

**35.** Moteur électrique selon la revendication 34,
dans lequel la source de tension (UZK) présente une connexion de source de tension (MP_UZK), laquelle est reliée au dispositif de détection de tension (86, 90).

**36.** Moteur électrique selon une des revendications 26 à 35,
lequel est relié à un ventilateur.

**37.** Moteur électrique selon une des revendications 26 à 36,
dans lequel le régulateur de courant (48, 68) est réalisé sous la forme d'un régulateur de courant analogique.

**38.** Moteur électrique selon une des revendications 26 à 37,
lequel présente un dispositif de numérisation (86, 90), lequel génère un signal de tension numérique en fonction du signal de tension.

**39.** Moteur électrique selon une des revendications 26 à 38,
dans lequel le régulateur de courant (48, 68) est conçu de façon à permettre une régulation sur un courant de 0 A.

Fig. 1

EP 1 854 202 B1

MP_UZK

24

UZK

86

144 — [ ] ‖ 142

146

140

U_MP1 — 44

MP1

148

+5V

158 — [ ]

160

U1_DIG — 84

μC

150

152 — ‖    154 — [ ]    156

Fig. 2

48

U ⌐ pwm

U

52

162    166    170    174    176

40

I_SOLL1

164    168    172

178    180

I₁

41

54

46

50

I_IST1

42

U

Fig. 3

27

Fig. 4

Fig. 5

Fig. 6

EP 1 854 202 B1

Fig. 7

Fig. 8

Fig. 9

Fig. 10

Fig. 11

Fig. 12

Fig. 13

Fig. 14

Fig. 15

PERIOD_1 — S238

T_KA := f_KA * T_K
T_KE := f_KE * T_K
t_KA := t_TIMER
— S302

RAMP1_UP — S304

START_TIMER1(T_K – T_KA - T_KE) — S306

WAIT(T_RETARD)
PHASE_CONST:=1
— S308

U2 in LATE_AREA? — S310 — Y → RESET_TIMER1 — S314

N

PHASE_CONST = 1? — S312

Y

T_LATE := t_TIMER – t_K
T_K := T_K - T_LATE
— S316

N — S320

RAMP1_DOWN

t_KE := t_TIMER
EARLY_COMMUT := 0
— S322

U1 in EARLY_AREA? — S324 — Y → EARLY_COMMUT := 1 — S326

N

EARLY_COMMUT = 1? — S328 → 
T_EARLY := t_TIMER – t_KE
T_K := T_K + T_EARLY
— S330

END — S332

Fig. 16

TIMER1_INTERRUPT — S250

↓

PHASE_CONST := 0 — S252

↓

RETURN — S254

**Fig. 17**

RAMP1_UP — S304

↓

i := 1 — S202

↓

WAIT(T_KA / N_KA) — S204

↓

L_SOLL1 := L_SOLL1 + L_SOLL / N_KA — S206

↓

i := i + 1 — S208

↓

i <= N_KA? — S210 — Y

↓ N

END — S212

**Fig. 18**

RAMP1_DOWN — S320

i := 1 — S222

WAIT(T_KE / N_KE) — S224

I_SOLL1 := I_SOLL1 - I_SOLL / N_KE — S226

i := i + 1 — S228

i <= N_KE? — S230

Y

N

END — S232

Fig. 19

n_CTRL — S292

n_i := const_i / T_K
I_SOLL := PID_RGL(n_s, n_i) — S262

END — S264

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0482913 A